(19)

Europäisches Patentamt
European Patent Office
Office européen des brevets

(11)　**EP 1 529 223 B1**

(12)　　　　　　　**EUROPEAN PATENT SPECIFICATION**

(45) Date of publication and mention
of the grant of the patent:
**12.03.2008　Bulletin 2008/11**

(51) Int Cl.:
***G01S 5/06*** *(2006.01)*　　　***G01S 5/02*** *(2006.01)*
***G01S 5/14*** *(2006.01)*　　　***G06F 3/033*** *(2006.01)*

(21) Application number: **03783865.3**

(22) Date of filing: **08.08.2003**

(86) International application number:
**PCT/CA2003/001179**

(87) International publication number:
**WO 2004/015555 (19.02.2004 Gazette 2004/08)**

(54) **METHOD AND APPARATUS FOR POSITION SENSING**

VERFAHREN UND VORRICHTUNG ZUR POSITIONSMESSUNG

PROCEDE ET APPAREIL DE DETECTION DE POSITION

(84) Designated Contracting States:
**AT BE BG CH CY CZ DE DK EE ES FI FR GB GR HU IE IT LI LU MC NL PT RO SE SI SK TR**

(30) Priority: **09.08.2002　CA 2397431**

(43) Date of publication of application:
**11.05.2005　Bulletin 2005/19**

(73) Proprietor: **XYZ Interactive Technologies Inc.
Toronto,
Ontario M2M 3E8 (CA)**

(72) Inventor: **LOHBIHLER, Andrew
TORONTO, Ontario M2M 3E8 (CA)**

(74) Representative: **Betten & Resch
Patentanwälte
Theatinerstrasse 8
80333 München (DE)**

(56) References cited:
**EP-A- 0 526 015**　　　　**EP-A- 0 849 700**
**WO-A-02/27348**　　　　**US-A- 4 862 152**
**US-A- 5 012 049**　　　　**US-A- 5 977 958**
**US-B1- 6 249 252**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

**PRIORITY CLAIM**

The present application claims priority from Canadian patent application number CA 2,397,431, filed August 9, 2002.

**FIELD OF INVENTION**

The present invention relates generally to computing interface devices and more particularly relates to a method and apparatus for position sensing.

**BACKGROUND OF INVENTION**

Computer systems configured with human interface devices are common for and are popular in a wide variety of business and educational applications. The most common interface device is the mouse and keyboard, which in their traditional format are coupled to the computer by a hard-wired connection. Since about 1990, wireless interface devices have become more common in the marketplace. Although the concept behind wireless interfaces was known prior to this date, interest in wireless interfaces was limited until the release of the 2.4 GHz unlicensed band for industrial, scientific and medical (ISM) applications.

Prior art wireless interface products commonly employ either direct sequence spread spectrum (DSSS) or frequency hopping spread spectrum (FHSS) techniques to communicate between a handheld device and a local receiver that interfaces with a computer and display monitor.

There are many types of non-wireless interface devices including touch sensitive computer input devices currently used for the purpose of digitizing touch on or in conjunction with computer displays. Such devices measure the position of a transmitter, stylus or finger touch on the sensor surface (for example, US Patent 5,365,461 to Stein). The measured position is used to generate coordinates for the purpose of interacting with the computer, for example in pointing to icons on the display, picking menu items, editing computer generated images, and feedback for input of hand-drawn characters and graphics.

Devices that sense wireless signals, corded devices, or human touch may sense using any number of technologies, including capacitive sensing, resistive sensing using a conductive overlay sheet, infrared sensing, acoustic wave sensing, and piezoelectric force sensing. Digitizers which use corded or tethered hand held styli such as pens or pucks typically use electromagnetic sensing, electrostatic sensing, resistive sensing, or sonic pulse sensing.

Devices responsive to wireless or corded transmitters are typically used for cursor control application, for example pointing to display icons and picking menu items. Devices that are responsive to styli (usually a wireless or corded pen) are used to create or trace drawings, blueprints, or original art. These devices are also used for character or handwriting recognition. It can be desired that the wireless or corded device have a pen and paper feel so that their use is intuitive to most users. Wireless devices generally do not require an intuitive pen-and-paper feel, but typically require that the user see the cursor appear on the interface screen under the touch of the pen before the writing surface is touched. For this reason wireless styli are limited to no more than five centimetres of wireless operation off the stylus writing surface (example: the Wacom pen) from Wacom Technology Corporation, 1311 SE Cardinal Court, Vancouver, WA 98683, U.S.A.

Some wireless devices operate at longer ranges (for example, about one to three metres) from the computer screen and are based on infra-red and/or acoustic media to transmit signals that are used to locate the transmitter in 3D space. The signals are received by a base receiver that triangulates the position of the handheld device based on time-delays. These devices are suitable for disabled users, and for users who require an interface over a wider volume of space such as for gaming. These technologies generally have limited range of operation and commonly require that a power cable be tethered to the hand-held device to provide power and be operable to switch signals between the handheld device and a base receiver. Accordingly, these devices are rather awkward to use as they are not fully wireless.

Lately, the emergence of 3D graphical games has increased a desire for 3D wireless devices allowing users to interface with games with built-in 3D features. There is also a need for faster rates of data for positioning, to allow users to have a more natural interaction with the computer, providing smoother positioning in a substantially delay-free manner. Also needed is a higher resolution positioning for increasingly sophisticated games and interfaces with high-resolution computer screens. However, there is an increasing need for devices that are truly wireless and allow multiple users to interface with the same interface screen and with a variety of controller functions.

There are many prior art technologies used for positioning and location the concept of phased-array antenna signal processing for locating radio transmitters extensively covered in the prior art. The methods are generally for the tracking of aircraft using active and passive radar and processing methods for characteristics about multiple objects that reflect radar signals. Generally, these methods involve two-way signal paths that involves a radio pulse reflecting from an object (typically monopulse radar) or a transponded signal from an active transponder circuit. The art of determining the location of single emitters is covered in patent US6,147,646 requiring that each emitter have their angles-of-arrival (AOA's) determined and put into bins using a multiplexed processing approach.

Methods for determining the location of reflected or transponded radio emissions using phase differencing is covered in various patents (US4,788,548; US4,977,365; US5,285,209; methods output the angle-of-arrival (AOA) of a signal and present the data to a display screen. These methods use a linear one or two dimensional antenna array but do not involve signal spreading with PN-codes, or the like.

Methods of range estimation are covered in various patents (US4,788,548; US5,510,795; US5,745,437; US5,999,131; US6,177,907; US6,288,776). These methods are based in phase differencing using range changes in curvature, phase differencing based on a two-way signal reflection, phase angle ambiguity calculation (common in synthetic aperture radar (SAR) methods), and range ambiguity estimation based on phase difference using signals with multiple frequencies. These range estimation techniques involve one or two-way signal paths involving signal reflections, transponded signals, and stationary or moving emitters.

Patent US6,198,436 discusses a method for receiving and separating signals from N-channels in a narrow-band communication system. Although this method is based on a coherent array of phased-array receivers, the signals are processed as a multiplexed processor arrangement to separate the signals of several channels.

The use of Code Division Multiple Access (CDMA) methods is extensively covered in prior patents for cellular phone technology and networks, wireless LANs, as well as for locating cell phones, and GPS systems and receivers. Specific patents (US5,999,131; US6,081,229; US6,249,680 ) cover the use of CDMA for locating radio transmitters. These methods distinctly cover location estimation based on time-delay-of-arrival (TDOA) for which ranges are estimated based on time delays. Techniques of this kind are impractical at close range because time delays are too short to be measured reliably and accurately. The benefits of methods for AOA estimation to locate transmitters in short range is not cited in CDMA patents and literature, and especially for multiple CDMA emitters.

Other patents (US5,510,800; US5,589,838) cover the use of Ultra-Wide Band (UWB) technology for radio location in the short range. These methods are practical for short range locating of radio transmitters and can adopt CDMA techniques to locate multiple transmitters. However, UWB technologies employ a wideband that limits the practical ability of detecting and locating UWB transmitters in short range. Furthermore, such technology would depend on the emergence and wide acceptance of UWB technology standards.

Existing systems that display absolute or relative position introduce some kind of mechanical or data-link delay that lowers the presentation speed to any display or monitoring device. Accordingly, there is a need for systems and methods of sensing position that increase the rate at which absolute position data is presented on a display for multiple objects and icons.

In US patent 5,977,958, a system and method for tracking a moving object very accurately at short ranges is disclosed. The method is based on measuring times of arrival of ultrashort RF pulses transmitted by the moving object to an array of receivers. Dealing with the ultrashort events is done by "strobing" the moving object position. To achieve the necessary resolution, on the order of 0.25 mm, the times of arrival of the pulses are determined by sampling the pulses digitally and fitting appropriate mathematical functions to the samples pulses.

In US patent 5,012,049, an apparatus for precisely locating the position of a transmitter is disclosed. The apparatus comprises transmitting means for transmitting a detectable signal and three coplanar, spaced apart receiving means for receiving the signal transmitted. The transmitting means comprises a laser diode adapted to emit a serie of flashs of light. The receiving means, in turn, comprises first, second and third receivers, respectively, each being capable of sensing the flashs of light emitted by the laser diode. Upon sensing the flashs of light, each receiver generates and transmits corresponding first output signals which are received and analysed by respective computation means.

SUMMARY OF INVENTION

It is therefore an object of this invention to provide an apparatus and method for sensing position that obviates and mitigates at least one of the above-identified disadvantages of the prior art.

According to the present invention, there is provided a system for sensing position as defined in claim 1 and a method for sensing position as defined in claim 56.

An aspect of the present invention relates to a wireless position sensing computer input device that is responsive to one or more electro-magnetic transmitting devices that are physically moved in three-dimensional space. The receiver is a passive array and can process signals from multiple transmitting devices that use unique DSSS, FHSS, and THSS spread-spectrum methods with pseudo-noise (PN) modulating codes. A single receiver can simultaneously detect and position multiple transmitters allowing combinations of three-dimensional position and angle orientation measurement of devices containing multiple transmitters.

An aspect of the invention provides a system for sensing position comprising at least two transmitting devices each operable to transmit an orthogonal CDMA radio signal. The system also comprises at least two receiver units in spaced relation to each other and each operable to receive a different version of each of the radio signals. The receiver units are comprised of an antenna and a receiver element. The system further comprises an electronic circuit coupled to the receiver element and is operable to substantially simultaneously determine a location of each of the radio transmitting devices in relation to the receiver units by distinguishing the transmitting devices based on the orthogonality of the radio signals and a comparison between each the different version of each respective the radio signal.

In a particular implementation of the foregoing, the antennas associated with each of the receiver units are spaced apart at a distance of about one-half of a wavelength of the radio signal. The orthogonal radio signals codes can include unique pseudo-noise (PN) codewords assigned to each of the transmitting devices. The different versions of the radio signal can be identifiable by using at least one of a radiated signal strength technique and a carrier phase-delay technique.

Another aspect of the invention provides a system for sensing position comprising transmitting device operable to transmit a radio signal and at least two receiver units in spaced relation to each other. Each receiver unit is each operable to receive a different version of the radio signal. The system further comprises an electronic circuit coupled to the receiver units and operable to determine, and output, a location of the radio transmitting device in relation to the receiver units based on a comparison between each different version of the radio signal.

The system can comprise at least one additional radio transmitting device. Each of the radio transmitting devices are operable to transmit a radio signal orthogonal to each other radio transmitting device. The electronic circuit is further operable to distinguish each of the other radio transmitting device. The electronic circuit is further operable to distinguish each of the radio transmitting devices from the other based on the orthogonal signals. The electronic circuit is further operable to determine a locations of the radio transmitting devices substantially simultaneously.

The antennas associated with each of the receiver units are typically spaced apart at a distance of about one-half of a wavelength of the radio signal.

The radio signals are typically based on a spread spectrum technology. The spread spectrum technology can be selected from the group consisting of direct sequence spread spectrum signals, frequency hopping spread spectrum signals, time hopping spread spectrum signals, linear frequency sweeping (chirp) signals, and hybrid signals.

The radio signals can be based on code division multiple access (CDMA) and the orthogonal codes can be unique pseudo-noise (PN) codewords assigned to each of the transmitting devices.

The different versions of the radio signal are identifiable via a phase shift between the versions of the received signals. The different versions of the radio signal can be identifiable using at least one of a radiated signal strength technique and a carrier phase-delay technique.

The transmitting device can be affixed to a pointing device, such as a mouse, and the electronic circuit can then be coupled with an input device on a personal computer having a display device and such that the pointing device is operable to move a cursor on the display device. The pointing device can include at least one button for user actuation and the radio signals can be based on code division multiple access (CDMA). The transmitting device is assigned a pseudo-noise (PN) codeword, and where an actuation of the button can be transmitted to the receiver units via inverting the PN codeword for at least one bit-period, or switching to another orthogonal pseudo-noise (PN) codeword for at least one bit-period, or the like.

The power supply incorporated into the transmitting device can be selected from the group consisting of a battery, a solar cell, a coil operable to receive energy from an EM powering field radiating proximal to the power supply, or a coil operable to induce electrical energy from a magnetic field by mechanical motion.

The system can be comprised of exactly two of the receiver units and in this case the location is typically expressed in a single-dimension.

The system can be comprised of exactly three of the receiver units, arranged in a triangular format. In this configuration, the electronic circuit is operable to receive a first input from a first pairing of the three receiver units and is further operable to receive a second input from a second pairing the three receiver units. The pairings have only one of the receiver units in common. The electronic circuit is further operable to determine a two dimensional position of the transmitting device based on a comparison of the first input and the second input.

The system can be comprised of exactly four receiver units arranged in a rectangular format; and the electronic circuit can be operable to receive four separate inputs from four respective pairings of the four receiver units. The electronic circuit can be further operable to determine a three dimensional position of the transmitting device based on a comparison of the separate inputs. The rectangular format can be in a plane arranged around a periphery of a compute display connected to the system, such that movements of the transmitting devices in relation to the receiver units can be reflected on the display.

The system can be comprised of eight of the receiver units arranged in a cube. The electronic circuit can thus be operable to receive eight separate inputs from eight respective pairings of the eight receiver units. The electronic circuit can be further operable to determine a three dimensional position of the transmitting device in relation to the cube based on a comparison of the separate inputs.

The electronic circuit can comprise a channel pair processor connected to the receiver units, a detector & position calculator connected to the channel pair processor, and an output device for presenting the location to an electronic peripheral attachable to the output device.

The transmitting device of the system can be incorporated into a computer interface selected from the group consisting of a mouse, a tilt-joystick, a pointer controller, a six-degree-of-freedom interface, and a gesture interface.

The transmitting device can be incorporated into a surgical instrument to be used to monitor the position of the surgical instrument during the performance of a medical procedure.

The transmitting device can be incorporated into an industrial robot, to track the position of the robot as it performs its function.

Another aspect of the invention provides a transmitting device operable to transmit a radio signal. The transmitting device is for communicating with at least two receiver units in spaced relation to each other. Each receiver unit is operable to receive a different version of the radio signal in order to determine a position of the transmitting device via an electronic circuit connected to the at least two receiver units.

Another aspect of the invention provides a receiver unit operable to receive a radio signal transmitted from a transmitting device. The receiver unit is for placement in spaced relation to another substantially identical receiver unit, such that each receiver unit is operable to receive a different version of the radio signal. The receiver unit is for connection to an electronic circuit connectable to both of the receiver units. The electronic circuit is operable to determine a location of the radio transmitting device in relation to the receiver units based on a comparison between each of the different versions of the radio signal.

## BRIEF DESCRIPTION OF THE DRAWINGS

Various embodiments of the present invention will now be explained, by way of example only, with reference to the following description of and the accompanying drawings, in which:

Figure 1A depicts radio-transmitting devices being detected and located in 3-dimensional space by a planar receiver array, and presented on a 3-dimensional XYZ screen display;

Figure 1B depicts radio-transmitting devices being detected and located in 3-dimensional space by a perimeter receiver array, and presented to a 3-dimensional XYZ screen display inside the perimeter;

Figure 1C depicts radio-transmitting devices being detected and located in 3D space by a 3-dimensional lattice receiver array, and presented to a display;

Figure 2 depicts the multiple device detection system for locating multiple radio transmitting devices and extracting data signals from the transmitting devices;

Figure 3A depicts an exemplary RF signal-processing block diagrams for each pair of radio receiver channels;

Figure 3B depicts another exemplary RF signal-processing block diagrams for each pair of radio receiver channels;

Figure 3C depicts another exemplary RF signal-processing block diagrams for each pair of radio receiver channels;

Figure 4A depicts an exemplary circuit diagram of the radio-transmitting device;

Figure 4B depicts another exemplary circuit diagram of the radio-transmitting device;

Figure 5 depicts a flowchart of a method of operative radio-transmitting devices;

Figure 6 depicts a flowchart of a method for PN-code detection system;

Figure 7 depicts a method of detecting multiple DSSS codes embedded in a common input signal;

Figure 8 shows perspective views of a 3-dimensional mouse controller in accordance with an embodiment of the present invention;

Figure 8a shows perspective views of a 3-dimensional mouse controller in accordance with an embodiment of the present invention;

Figure 9 is a perspective view of a tilt joystick controller in accordance with an embodiment of the present invention;

Figure 10 is a perspective view of a pointer controller in accordance with an embodiment of the present invention;

Figure 11 is a perspective view of a six-degree-of-freedom controller in accordance with the present invention; and,

Figure 12 is a perspective view of a gesture interface controller glove in accordance with the present invention.

## DESCRIPTION OF THE INVENTION

Before discussing embodiments of the invention in detail, it is useful to review certain technological principles used to implement certain features of the present invention in order to provide context in understanding certain implementations and features of the present invention.

Spread Spectrum Signals

Spread-spectrum signaling can be effected in a number of ways. Examples of spread-spectrum signals include Direct Sequence Spread Spectrum (DSSS) signals, Frequency Hopping spread Spectrum (FHSS) signals, Time Hopping Spread Spectrum (THSS) signals, Linear Frequency Sweeping (Chirp) signals, Hybrid signals, and the like. Wireless products frequently employ some type of spread spectrum technique, such as direct sequence spread spectrum (DSSS) or frequency hopping spread spectrum (FHSS), to communicate between the transmitter and receiver (single or two-way). A distinguishing feature of the spread spectrum technique is that the modulated output signals occupy a much greater transmission bandwidth than the baseband information bandwidth requires. This band "spreading" is achieved by encoding each data bit in the baseband information using a codeword, or symbol, that has a much higher frequency than the baseband information bit rate. The resultant spreading of the signal across a wider frequency bandwidth results in comparatively lower power spectral density, so that other communication systems are less likely to suffer interference from the device that transmits the spread spectrum signal. It also makes the spread signal harder to detect and less susceptible to interference and harder to jam.

Both DSSS and FHSS techniques employ a pseudo-noise (PN) codeword known to the transmitter and to the receiver to spread the data and to make it more difficult to detect by other receivers lacking the codeword. The codeword consists of a sequence of "chips" having values of -1 or +1 (polar) or 0 and 1 (non-polar) that are multiplied by (or Exclusive-OR'ed with) the information bits to be transmitted. Accordingly, a logic "0" information bit may be encoded as a non-inverted codeword sequence, and a logic "1" information bit may be encoded as an inverted codeword sequence. Alternatively, a logic "0" information bit may be encoded as a first predetermined codeword sequence and a logic "1" information bit may be encoded as a second predetermined codeword sequence. There are numerous well-known codes, including M-sequences, Walsh codes, Barker codes, Gold codes and Kasami codes. Of all these code types, several different PN sequences can be generated of the same length that are "orthogonal" to each other (i.e. they do not correlate).

Methods for detecting and "de-spreading" PN-codes are generally done using "matched-filter" or "sliding-correlator" structures within a digital signal processor (DSP). *CDMA Matched Filter Implementation in Virtex Devices*, Xilinx Application Note 212, January 10, 2001 discusses an approach to efficiently processing CDMA applications using a matched filter approach. If matched-filters are arranged to match multiple orthogonal PN-codes in parallel inside a DSP, then they can operate independently to detect and process multiple codes "virtually" simultaneously (see *CDMA Matched Filter Implementation in Virtex Devices*, Xilinx Application Note 212, January 10, 2001).

Multi-path Reduction

Multi-path propagation is a phenomenon that occurs, for example, if there are reflectors, obstacles, and boundaries, etc., in the propagation medium. A receiver in the wave field will receive not only a signal from a signal source through a direct propagating path, but it will also receive signals (called multi-path signals) reflected from these objects. Multi-path signals are always delayed as compared to direct-path signals. In fact, multi-path signals can severely degrade the system's performance if they are not separated from the direct-path signal.

In a spread-spectrum system, $\Delta t$, the width of the main lobe of the correlation function after de-spreading, can be written as $\Delta t = 1/BW_{Code}$ where $BW_{code}$ is the bandwidth of the spread-spectrum code used for despreading. $\Delta t$ can be regarded as the ability of a spread-spectrum system to resolve multi-path signals from their direct-path signal after despreading.

The following is an example for acoustic systems showing that the multi-path problem can be eliminated by the present invention. Given: an acoustic signal is propagating through the air at an approximate speed of sound $Vs = 330 m/s$ and $BW_{code} = 1MHz$, then $\Delta d$, the minimum distance between a direct-path signal and the multi-path signals that a spread-spectrum system is able to resolve, becomes:

$$\Delta d = \Delta t * V_S = V_S / BW_{Code} = 0.33\, mm$$

That is to say, any multi-path in an acoustic signal that is 0.33mm away from the direct-path signal can be removed. This can be difficult to achieve in narrowband radio systems.

For short-range radio-location systems, this approach to multi-path reduction is impractical because for a minimum resolution of 1mm or less, a high signaling bandwidth (more than 1 GHz) is typically requires to accommodate the high speeds of radio signals. However in short-range spread-spectrum radio there are combined strategies to remove multi-path such as: transmitting signals at low power, mixed DSSS and FHSS spreading schemes, diversity schemes and equalization, thereby weakening multi-path reflections relative to the direct path signal. Methods of multi-path rejection include:

- Adaptive equalization with a training signal
- Blind-equalization (where no training code is required)
- Antenna array diversity
- Frequency diversity
- Antenna polarization diversity

The adaptive and blind equalization methods improve the signal corrupting effects of signal multi-path by recovering the signal strength during a signal fade-out. An equalizer in a receiver compensates for the average range of expected channel amplitude and delay characteristics. Equalizers must be adaptive since the channel is generally unknown and time varying.

Antenna diversity by contrast exploits the random nature of radio propagation (or at least highly uncorrelated) signal paths. Diversity design implementations are done at the receiver and are unknown by the transmitter. The strategy for diversity occurs by recognizing that a receiver element is experiencing a deep fade-out while other receiver elements receive strong signals. Consequently the faded signal phase calculation is excluded from the location calculation.

Frequency diversity is based on simultaneously transmitting on more than one carrier frequency such that while one (or more) channels will fade, others will not allowing some coherent signaling to occur. FSK modulation of a PN-code in direct sequence may be used but would require a large frequency spread to make the diversity workable. For instance if the frequency spread was small, both channels can experience the same degree of multi-path fading

Polarization diversity is based on the assumption that the transmitting antenna polarization is not known and that received signals to multiple antenna elements are uncorrelated. Cross-polarized antennas have multiple spatial elements and reduce multi-path effects by reducing phase delay caused by receiving multiple signal reflections with different polarizations. This applies to signals that are blocked or obstructed at short range.

SNR Improvement

It is commonly understood in a spread-spectrum system that, when the information bandwidth is evenly spread, the system Processing Gain (PG) can be expressed as: $PG(dB)=10\log_{10}(BW_{Sig} / BW_{Info})$. Having the PG, the Signal-to-Noise Ratio (SNR) of the spread-spectrum system can be improved to: $SNR_{SS} =PG+SNR_{Sig}$ where $SNR_{SS}$ and $SNR_{Sig}$ are the SNRs of a spread-spectrum receiver and the transmitted signal respectively.

Benefits of having improved SNR in a spread-spectrum system include:

- Higher noise immunity.
- Transmitter devices can be cost-effectively designed to have balanced noise immunity through signal spreading.
- Signals can be transmitted with less power.
- Transmitted signals can be detected over longer range.
- The power consumption of transmitting device(s) can be greatly reduced so that various power supply methods, which are impractical in some cases for narrowband devices, can be used.
- Transmitter devices can be detected and located within close proximity of each other.
- Higher position location resolution can be easily achieved.
- Longer PN-codes can be used to increase SNR with no impact on sample speed.

For example, for a spread-spectrum system with $SNR_{Sig}= - 10dB$ (signal energy is 10-times less than noise) and PG = 30dB (signal bandwidth is 1000-times wider than information bandwidth), its $SNR_{SS}= 20dB$. That is to say, with a properly designed PG, the spread-spectrum system can pick up information from signals below noise. A narrowband system can not work in an environment that has negative SNR, unless some additional signal processing methods, e.g. signal averaging, are used.

Phased array receivers

In a phased array, each DSSS radio receiver receives a transmitter signal in the form of a DSSS code modulated carrier wave. Each receiver connects to a common LO (local Oscillator) that when mixed with the received radio wave, will down-convert the RF wave to an IF (Intermediate Frequency) wave. The frequency of the IF wave is determined by: $f_{IF} = f_{RF} - f_{LO}$ and is usually a frequency between 1 MHz and 100 MHz. A suitable IF is chosen to minimize the phase-noise between the IF signals measured at all elements in the phased array. At this point it should be noted that the IF signals are "phase coherent" meaning that they have a common phase reference. The IF signals are then entered through an analog phase/amplitude detector. This is done by splitting the signals into the I(in-phase) and Q(quadrature-phase) components such that the phase and amplitude signals are determined by: $\Phi(t) = \arctan(I / Q)$, and

$$A(t) = \sqrt{I^2 + Q^2}\,.$$

In a spread-spectrum receiver, the phase and amplitude signals are still code modulated signals at this stage and are sample with a fast ADC (Analog-to-digital converter) circuit and hence sent to a DSP circuit for further processing. A CDMA processor will use a code-matching filter to determine which code will correlate with the input signal producing a correlation peak output, thereby determining which transmitter is transmitting at that time. The DSP would use parallel hardware or a fast code-multiplexer processing architecture to correlate multiple codes substantially simultaneously. This can be implemented with high-speed parallel DSP hardware, and/or field-programmable gate-array (FPGA) hardware designs.

Location tracking

Location Tracking in embodiments of the invention employ radiated signal strength (RSS) and the relatively measured radio carrier phase-delay (CPD) to detect and position the radio transmitting device(s). The phase delay is measured between signals received at a minimum of two receiver antennas and processing channels. This method will be referred to as the CPD model.

The CPD model used in embodiments of this invention is based on radio signals propagating through 3D space. That is, when a wave field is confined to propagating through 3D space, such as the free space in which an EM signal propagates, the associated RSS is then modeled to be linearly proportional to the inverse square of $R$, as $RSS \propto 1 / R^2$ where $R$ is the distance between a radio transmitting device and a receiver element However, in the CPD model the relative phase-delay between two receivers is related to the relative distance that a radio signal transmitter is away from the receivers as; $\Delta x = \Delta\Phi\, \lambda / 2\pi$ where $\lambda$ is the wavelength of the radio carrier signal. Together with RSS and phase-delay measurements the receiver array can determine the 3-dimensional (XYZ coordinate) location of a transmitting device using a minimum of 4 receiver antennae and processing channels. Using this basic design with more than 4 receiver pairs, then a plurality of radio transmitting devices may then be tracked by receiving and calculating the relative RSS and phase-delays from PN-coded radio signals.

Calibration is established in embodiments of this invention by taking several fixed measurement points (3D-coordinates) of a fixed radio-transmitter relative to the receiver array and converting them to a fixed database of signal-strength and phase-delay measurements. For example, an experimental model would require calibration points on a spatially fixed plane in three-dimensional space with constant Z, and take phase-delay and/or RSS measurements at these points. A matrix of experimental positioning data can then be established, and three-dimensional (XYZ-coordinate) location resolution can be obtained and/or improved using this data. Furthermore, self-calibration can be achieved by using a fixed transmitter mounted close to the receiver array providing a periodic update caused by disturbances in the receiver near-field (see References 3 and 4).

Device Communication

Data communication employed in embodiment in this invention are similar to common spread-spectrum communication systems understood by those of skill in the art upon full review of the teachings herein. To perform communication procedures, after de-spreading, a bit decision is made based on the sign of the de-spreading correlation peak output for a particular radio-transmitting device. If a radio-transmitting device utilizes a switch to convey information (such as a wireless mouse using a "right-click") then the device will encode a data bit using "bit-inversion-modulation". That is, the PN-code will be inverted for at least one "bit-period". If more than one data event is conveyed by the radio-transmitting device then multiple PN-codes can be assigned for transmitting additional data information.

Power Supply for the Transmitting Device

In various embodiments of the present invention, at least four different methods to supply power for the active radio transmitting devices can be employed, which include: 1) a chemical battery; 2) a solar or light-powered cell; 3) an EM powering field in free space with a loop antenna and powering circuit built into the transmitting device; and 4) mechanical motion inducing electricity from a magnetic field in free space using an induction coil and powering circuit built into the transmitting device. It is to be noted that, due to use of spread-spectrum signals, an active radio-transmitting device can require less power than an active device transmitting a narrow band carrier wave. This can enable the above power supply methods to be more practical than in other circumstances.

Two or Three-dimensional Displays

An important performance characteristic of an interface device, particularly to position high speed motion to a computer and display monitor, and the like, can be the two-dimensional or three-dimensional coordinate data measurement rate and the speed of data transferred from transmitter to the receiver array. Wireless interface devices are no exception. It is therefore often desired to increase and/or maximize the rate at which position data is calculated and to also increase and/or maximize the transfer of high-speed communication data at the same time.

Embodiments of the present invention allow multiple radio-transmitting devices to have their absolute position displayed "virtually simultaneously" on a display or monitoring device at high speed. This is accomplished because all transmitting devices are detected and positioned within the same code-matching cycle in the receiver's processor. Also, the radio-transmitter to receiver path is fast, and does not introduce any delays (compared with delays in mechanical interface devices, such as angle tilt devices for examples). High-speed position-capture and display is accomplished with parallel radio receiver channels and signal processing methods, and without the fuse of multiplexed structures in hardware and software that ultimately limit the capture and display speeds.

Having discussed certain technological principles, specific embodiments of the invention employing the foregoing principles will now be discussed. It should be understood that the foregoing principles can be applied to the various specific embodiments below to provided desired functionality when implementing the teachings herein.

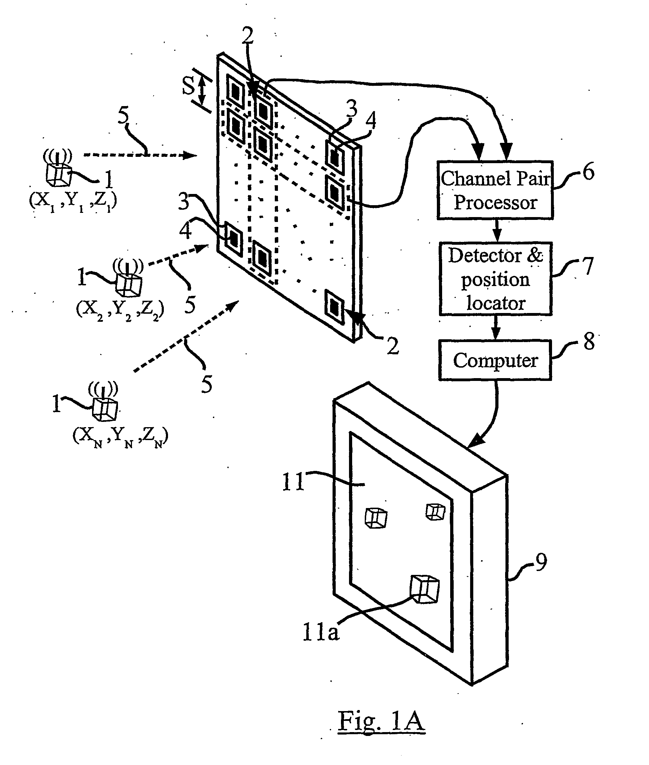

Referring now to Figure 1A, at least one electro-magnetic signal transmitting device 1 movable at a various displacements from an array of electromagnetic receiver units 2 is shown. The receiver units 2 form an array of electromagnetic receivers arranged in a line, a plane, or a three-dimensional configuration, and it is to be understood that many configurations are possible. Each receiver unit 2 comprises a receiver element 3 and an antenna 4 respective thereto. Each antenna is arranged such that its adjacent antenna 4 is at a distance of about one half of a wavelength apart from each other, indicated with the dimension S in Figure 1a. Each antenna 4 is so positioned to improve antenna efficiency (i.e. impedance mismatch) and reduce cross-coupling losses between antennas 4. Each antenna 4 receives the signals 5 from each transmitting device 1. The antenna 4 for the receiver elements 3 are, in the present embodiment, chosen to be compact and are of the micro-strip, patch, or directional type to reduce gain differences and polarization effects that can cause errors.

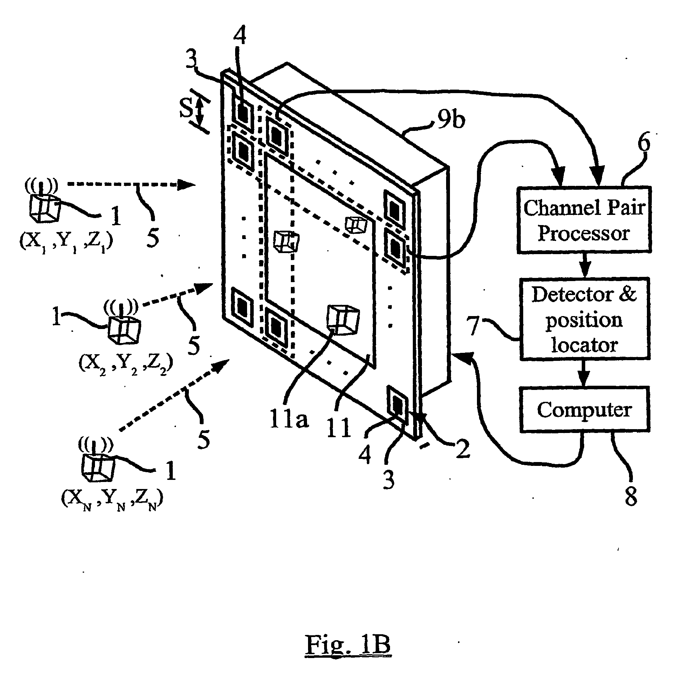

The system in Figure 1A also includes a channel pair processor 6 that is connected to a given pair of receiver units 2 in order to receive input therefrom. Thus, it is presently preferred that there be an even number of receiver units 2, however receiver units 2 can also be shared in pairs. Each channel pair processor 6 is in turn connected to a detector & position calculator 7, which in turn feeds its output to a computer 8. Computer 8 then uses the data received from detector & position calculator 7 to present information that is representative of the positions of transmitting devices 1 on a display 9.Figure 1B shows a system that is substantially the same as the system in Figure 1A, with some notable differences, and like items in each Figure are marked with like reference numbers, but items in Figure 1B include the suffix "B". The system in Figure 1B will be discussed in greater detail below.

Referring again to Figure 1A, in an embodiment of the invention, the position of transmitting devices 1 in three-dimensional space (also referred to herein as XYZ space) is determined for eventual use by computer 8 attached to each receiver unit 2 via detector & position calculator 7 and channel pair processor 6. As radio-transmitting devices 1 transmit signals 5 to the receiver units 2, each receiver unit 2 receives a duplicate signal from the respective transmitter 1. When each device 1 moves in XYZ space the difference in relative line-of-sight (LOS) path between the device and any antenna 4 causes a difference in the relative phase of the received signal at each antenna 4. Thus the phase difference is shifted between each of the units 2 in proportion to the time difference of the received signal to each antenna. 4. The received signal strength (RSS) at each antenna 4 also changes in proportion to distance between the transmitter device to each receiver antenna 4. The phase-difference and relative RSS can vary for any pair of receiver array elements 4 that are simultaneously sampled by their respective channel pair processor 6. The degree of phase difference and signal strength difference typically varies according to a "near-field" or short-range radio mathematical model..

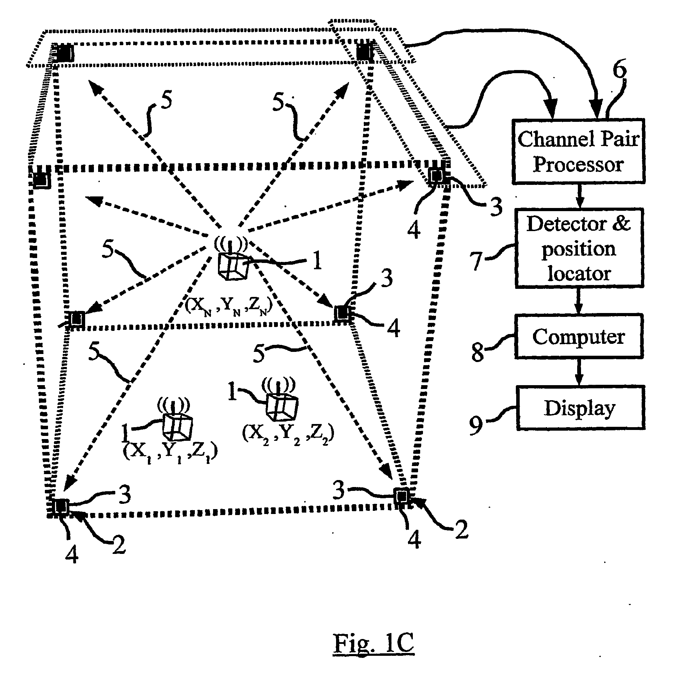

As previously mentioned, the array of receiver units 2 can be arranged in different geometric patterns to provide the optimum (or as otherwise desired) ability to discern the phase and signal strength difference between any pair of receiver elements 3. For three-dimensional position determination (or XYZ position display shown in Figure 1A) the antenna array elements are arranged in a plane, although it is to be understood that this is merely an exemplary arrangement. Indeed, the receiver units 2 can be arranged linearly on the perimeter of a rectangle (as shown in Figure 1B), surrounding display 9b. This arrangement is suited for a display 9b that is used to present a representation of three-dimensional space that this is situated inside the perimeter of the array, providing the convenience of mounting the array of receiver units 2 and simplifying calibration of the array with display 9b. Alternatively, the array of receiver units 2 can itself be positioned in three-dimensional space (for example, at each vertex of a cubic lattice, as shown in Figure 1 C) such that multiple radio-transmitters are located within or in proximity to the array.

Whichever configuration is used (Figure 1A, 1B or 1C) radio transmitting devices 1 can be incorporated into a 2D or 3D wireless mouse, a tilt joystick, a pointer device, 6DOF controller, a gesture interface controller, or the like.

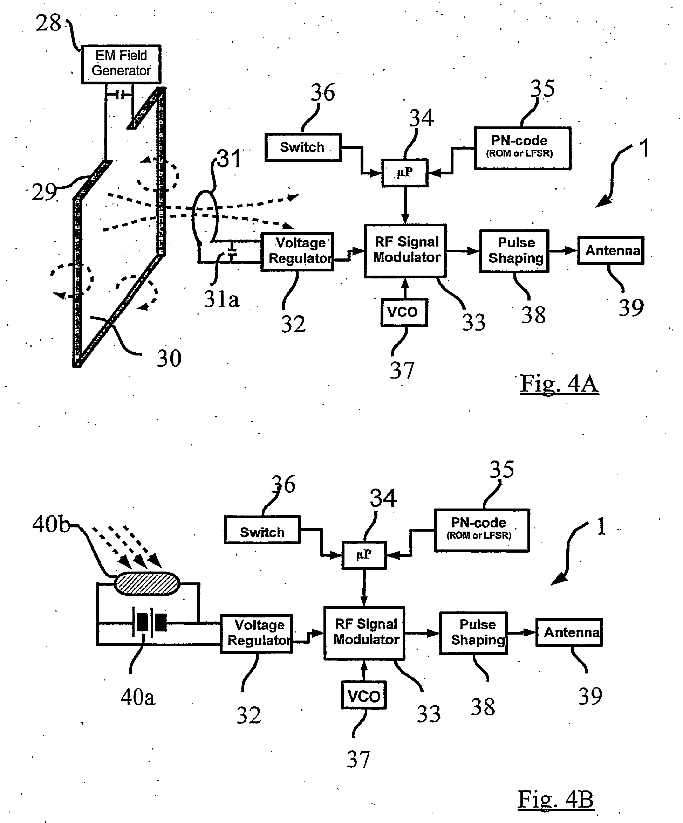

When implementing the systems shown in Figures 1A, 1B or 1C, it is presently preferred to implement the system using spread spectrum technologies. In particular receiver units 2 and transmitting devices 1 utilize a pseudo-noise ("PN") code signal modulation structure. Figures 4A and 4B each show block diagrams of how, in hardware, transmitting devices 1 can be implemented. Receiver units 2 are operable to receive signals 5 transmitted by transmitting devices 1 according to whichever implementation is used Figures 4A and 4B.

Common to the systems in Figures 1A, 1B and 1C, a plurality of radio transmitting devices 1 transmit signals 5 to the array of receiver units 2. The hardware implementation of the active radio transmitting devices 1 can have generally the same electrical circuitry (such as the circuitry shown in figures 4A and 4B), with only a small modification being the modulating PN-code respective to a particular transmitting device 1. Signals received by the receiver units 2 are also received independently by each receiver element 3 and processed by a multi-channel signal processor 6 such that each transmitting device 1 is independently detected, and the three-dimensional (XYZ coordinate) location of each radio-transmitting device 1 is determined by a locator 7. Location and identification data is then sent to an interfacing computer 8 for presentation to a display, such as 9 or 9b. In the example shown in Figures 1a and 1b, the displayed image is in the form of a "cube" cursor 11a shown in the display viewing area 11, and in a present embodiment the "cube" cursor 11a is variable in size to convey depth consistent with the 3-dimensional effect of the transmitting device 1 respective to a given cursor "cube" 11a. In Figure 1A and 1B, a given cursor 11 a appears larger depending on the Z-coordinate of the transmitter relative to the receiver array.

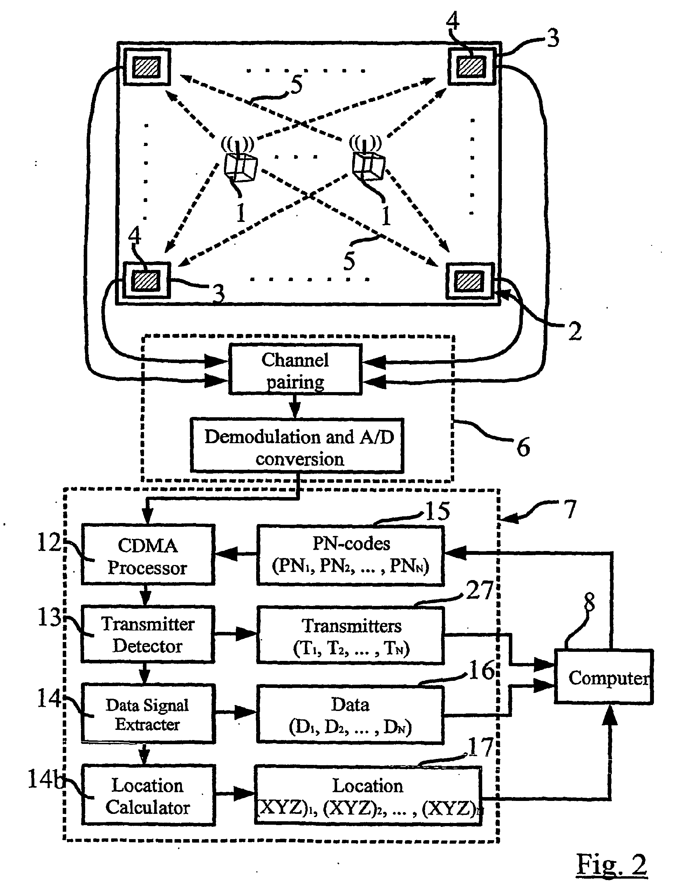

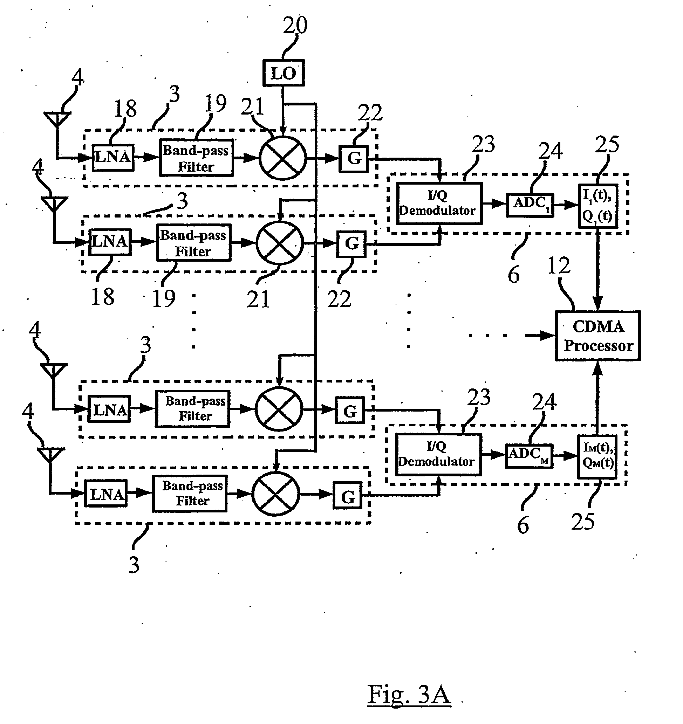

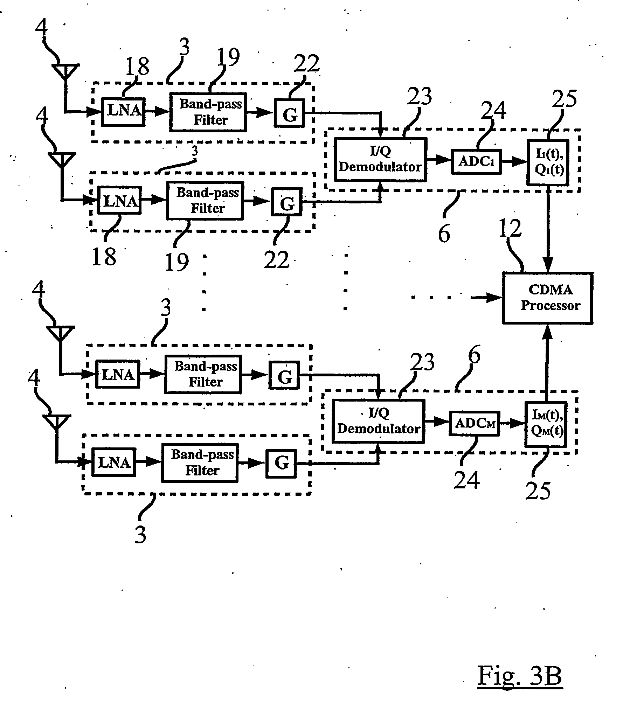

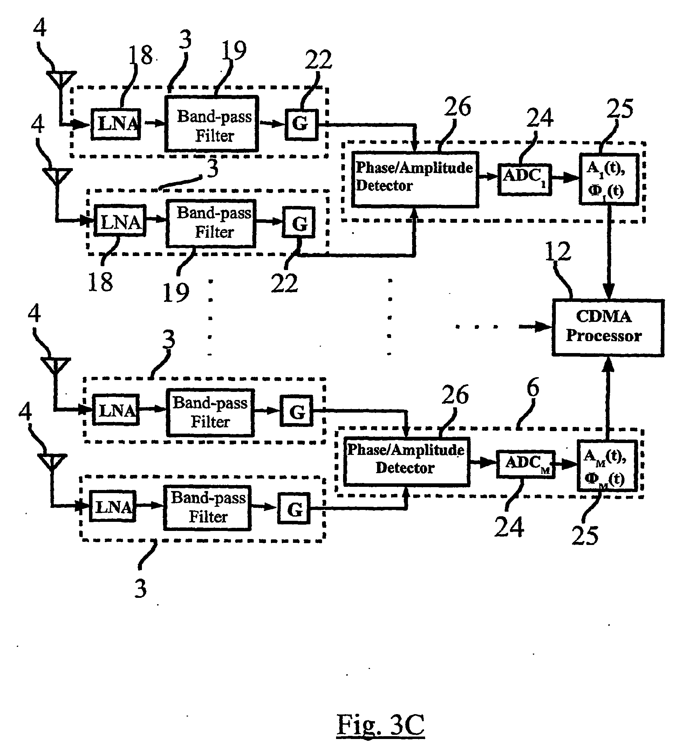

Each of Figures 3A, 3B and 3C reflect slightly different implementations of certain components shown in Figures 1A, 1B and 1C and 2. Referring now to Figures 2, 3A, 3B and 3C, the receiver units 2 each comprise a radio receiver element 3 that receive signals 5 from transmitting devices 1. Referring to Figure 2, signals 5 vary in voltage while oscillating at a radiating frequency (RF). Each antenna 4 that receives the signals 5 reduces cross-coupling of the antenna field with the other receiver elements 3. As seen in Figures 3A, 3B and 3C, receiver elements 3 include a low-noise amplifier (LNA) 18 that boosts the signals 5 and a band-pass filter (or image rejection filter) 19 separates the wanted narrowband carrier signal from external interference. In the implementation of element 3 in Figure 3A, a mixer circuit 21 mixes the RF input signal with a local oscillator 20 signal to generate a down-converted intermediate frequency (IF) signal. An IF amplifier 22 boosts the IF signal to a pre-defined voltage for the I/Q demodulator 23, which splits the IF signal into an in-phase "I" signal and a quadrature-phase "Q" signal. An analog-to-digital converter (ADC) 24 converts the I and Q signals to digital form and a CDMA processor unit 12 collects the amplitude and phase information 25 for all functioning devices, and, referring again to Figure 2, a detector 13 determines which devices are present. Detector 13 uses stored PN-codes 15 respective to each transmitting device 1 to detect device codes and store the device detection data 27. Transmitter detector 13 and a data extractor 14 removes modulated data from the PN-coded signal of each transmitting device 1. A device locator 14a removes nonlinear radiated signal-strength (RSS) variations and fluctuations caused by changes in the radio-transmitting environment to the radio receiver array 2. CDMA processor unit 12 also determines the frequency of the processed RF signal of each channel pair, for the purpose of location calculation of RF transmitters using FHSS modulation. Device locator 14a determines the three-dimensional location of each active transmitting device 1 based on frequency data 16, radiated signal-strength (RSS) and phase data calculator 25. The three-dimensional location is derived by locator 17. The identity of which device 1 being processed is derived by transmitter determiner 27, and transmitter switch data 16 are assembled into packets for interface with computer 8.

Referring again to Figure 4A, for one particular implementation of teach device 1, there is an EM field generator unit 28 to provide an EM field tuned to the same frequency as the radio transmitting device power coil 29. EM energy is radiated from an EM field coil 29 and induced by the radio transmitter power coil 31, and regulated by a device power circuit 32. The radio transmitting device power circuit supplies sufficient voltage to the RF signal modulator circuit 33. Each transmitting device 1 also includes its own unique PN-Code 34 supplied to a read-only-memory (ROM) 35a or a linear-feedback shift register (LFSR) generator 35b to generate unique PN-codes. A voltage controlled oscillator (VCO) 37 provides the RF wave when modulated with the PN-code to produce an RF modulated waveform. A switch 36 sends a single data bit to modulator 33 to modulate the PN-code to communicate switch events. The RF modulator 33 will periodically and/or continuously generate RF carrier signals modulated by the PN-code of this device. These carrier modulated PN signals are then provided to a pulse shaping circuit 38 to limit the spread, if necessary, and then to an antenna to transmit the coded signal 5. The EM powered radio-transmitting device will operate only within range of the EM powering field area 30 (see Figure 4A).

In addition to the transmitting devices 1 disclosed above, there are also components in the embodiments discussed herein to perform the radio transmitting device-powering functions away from the array of receiver units 2. Figure 4A shows an EM power coil 29 which is used to create a strong EM field around the coil 29 allowing transmitting devices 1 on or near the powering surface area 30 to be wirelessly powered by an induction coil 31 as shown in Figure 4A. In other embodiments the power coil 29 can be separate and away from the receiver array 2 still allowing transmitting devices 1 to receive the EM field 30. The induction coil 31 will be in resonance or near-resonance with the EM power field using a resonance capacitor 31a to optimize powering. In another embodiment, shown in 4B, there is provided a separate self-contained power source 40 (such as a chemical battery and/or a solar/light cell).

There are various ways of implementing the RF modulator 33 for the radio transmitting device designs illustrated in Figures 4A, 4B. The most common approaches is to use a digital ROM to read a fixed PN-code, or to use an LFSR to generate the PN-code using fixed circuit logic or programmable firmware. The ROM or LFSR will first generate the PN-code as a square wave, and then send this signal to the RF modulator 33 along with VCO 37 signal. The antenna 39 can be of various types but it is presently preferred that it be a miniature micro-strip, patch, loop, wire, whip, feed-through dipole, directional antenna, or the like. The presently preferred transmitting antenna 39 would typically be non-polarized and have a near-isotropic directional beam to reduce phase difference errors at the antenna array.

The RF modulator 33 initiates its own operation by getting a clock signal from an internal clock source, to request the next PN chip or code bit from the ROM 35 or LFSR 35. When a sequence of this data is clocked out, it forms a PN-code sequence signal that is modulated and sent to the antenna 39. Note that the PN-code can be either successively repeated after the code-end is reached or is repeated after a delay period.

Referring again to Figure 2, it is presently preferred that the array of receiver units 2 is configured in a substantially rectangular format, although a wide variety of shapes are possible. At each vertex of the array of receiver units 2 there is disposed an antenna 4 to receive signals from the transmitting devices 1. Antennas 4 are connected to radio receiving element circuits 3 that connect to the channel pair processor 6 and the digital CDMA processor 12 housed within detector & position locator 7. Channel pair processor 6 is analog in nature and processes received signals 5 handling such functions as power amplification, filtering, analog-to-digital converter (ADC), and the like. After signals 5 from devices 1 are sampled and digitized, CDMA processing unit 12 is used to do the signal processing procedures, including code synchronization, matched-filtering, amplitude and phase determination using phase data calculator 25. These results are then passed to a transmitter detector 13, data signal extractor 14, and device locator 14a to acquire data for the desired system operation, such as device identification, tracking and communication, etc. Finally, these data are transferred to computer 8 via a common serial link (serial, USB) or the like. This data may then be used in a computer system, or any electronic device that may employ a wireless interface, such as for presenting the receiving data on a display 9 or 9a.

In the foregoing embodiments, there is typically a one-way communication between the devices 1 and the array of receiver units 2. Typical CDMA systems use a return link for synchronization purposes, however, in certain implementations it can be possible to manage CDMA devices asynchronously to perform system functions. This can further save the cost of the system implementation. Synchronization in this system is thus not required because each transmitter 1 uses a unique PN-code that is of equal length to each other transmitter.PN-code. As well, each CDMA detector PN-code is of equal length. Using parallel running matched-filters in the CDMA detector 12 will substantially ensure that a PN-code match detection will occur once for each code cycle for any transmitter device 1. Even if an arbitrary time delay is introduced between transmitted PN-codes, the CDMA processor 12 can detect the code-match between the time delays. Synchronization is therefore not essential to detect multiple transmitters providing that the CDMA processor 12 "knows" the PN-codes and that the chosen PN-codes are truly orthogonal.

Referring again to Figure 3A, each signal receiver element 3 is connected to its own independent antenna 4. Channel pair processor 6 includes a separate A/D converter (ADC) 24, and a separate PN-code multiplexed matched-filter 25 that operates in parallel with each other receiver element 3. The signal received at channel pair processor 6 from each receiver element 3 is a mixture of PN-coded signals from all the devices 1 that are delivering signals 5 to antennas 4. The signals are fed to a signal low-noise amplifier 18 respective to each element 3 and thence to a band-pass filter 19 to remove unnecessary RF noise and interference. The signals of each channel are mixed with the signal of a common Local Oscillator (LO) 20 and the output IF signal is amplified 22 and I/Q demodulated 23. The I/Q demodulated "composite" signal is fed to an ADC 24 for each I and Q signal to be converted into digital format and stored in a data register 25 ready to be processed by the CDMA detector 12.

As previously discussed, each receiver element 3 receives a copy of a transmitter signal in the form of a PN-code modulated carrier wave. Each receiver element 3 connects to a common LO (local Oscillator) 20 that when mixed with the received signal, will down-convert the RF wave to an IF (Intermediate Frequency) wave. The frequency of the IF wave is determined by:

$$f_{IF} = f_{RF} - f_{LO} \qquad (1)$$

and for this embodiment is typically a frequency between about 1 and about 100 MHz but can be between about 20 MHz and about 80 MHz and can also be between about 40 MHz and about 60 MHz. A suitable IF is chosen to minimize the phase-noise between the IF signals measured at all receiver units 2. The IF signals for all receiver elements are "phase coherent", that is, that they share a common phase reference. The IF signals of a pair of channels then enter through an I/Q demodulator 23 which outputs the "composite" I and Q signals which are a sum of the individual transmitter signals. By splitting the IF signals into their I (in-phase) and Q (quadrature-phase) components each pair of receiver element 3a has a mixture of PN-coded signals and the DSP processor extract, the I/Q signal pair components for each transmitting device 1. These PN-code modulated signals are sampled with a fast ADC circuit 24 and hence sent to the CDMA processor 12 which determines the I and Q signal component amplitude corresponding to a particular transmitting device 1. The phase and amplitude signals for each transmitting device 1 are determined by:

$$I_k(t) = \sum_i^N I_{i,k} \ , \quad Q_k(t) = \sum_i^N Q_{i,k} \ ; \qquad (2)$$

$$I_{i,k}(t) = F_{mf}(I_k(t), C_i(t)) \ , \qquad (3)$$

$$Q_{i,k}(t) = F_{mf}(Q_k(t), C_i(t)) \ , \qquad (4)$$

$$\Phi_{i,k}(t) = \tan^{-1}(I_{i,k}(t)/Q_{i,k}(t)) \ , \qquad (5)$$

$$A_{i,k}(t) = \sqrt{(I_{i,k}(t))^2 + (Q_{i,k}(t))^2} \ , \qquad (6)$$

$$S_i(t) = \sum_{k=1}^M A_{i,k}(t) \ , \quad a_{i,k}(t) = A_{i,k}/S_i(t) \qquad (7)$$

where $I_{i,k}$ and $Q_{i,k}$ are the in-phase and quadrature phase signal components for device "i" where "N" is the number of transmitter devices 1, and "k" is the chosen pair of receiver elements 2 in the array, and "M" is the total number of chosen receiver element pairs.

The CDMA detector 12 uses a matched-filter algorithm $F_{mf}$ such that a code for each device 1 (each device 1 is identified as "i" in Equations 2-7) is correlated with the signal received at each receiver unit 2 (each pair receiver channels 3a is identified as "k" in Equations 2-7) and outputs the correlation peak amplitudes $I_i$, $Q_i$ as shown in equations (3) and (4). The matched filter algorithm is typically a convolution function implemented digitally, and is used here to correlate the channel input with a known PN-code $C_i$. A suitable method of implementation is known as the transposed FIR method of doing matched filtering (see *CDMA Matched Filter Implementation in Virtex Devices*, Xilinx Application Note 212, January 10, 2001). Note that $I_i$, $Q_i$ are still signed quantities and the signed information is removed when $A_i$, $\Phi_i$ are calculated in equations 5 and 6 (i.e. they become positive quantities). If any value of $A_i$ exceeds a threshold for a given transmitter "i" then that transmitter is detected, and hence the coordinate may be calculated to position the transmitter "i". The quantities $S_i$, $a_{i,k}$ calculated in equation (7) are a normalization of the amplitude and are used to calculate a phase "correction" caused by occlusion/multi-path effects, thereby improving the device positioning accuracy.

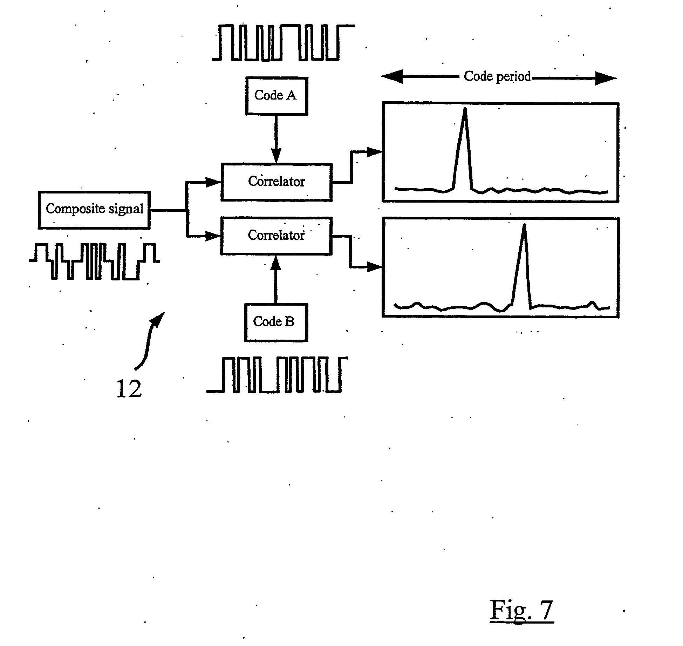

The amplitude and phase based position locating operation is facilitated by the use of PN-code signals that are mutually orthogonal. As shown in Figure 7, two examples of PN-codes of active radio transmitting device signals, PN-code A and PN-code B, are comprised of binary bits in series. These two codes occupy the same spectrum, which is fairly flat across the entire signal bandwidth. Generally speaking, the number of ones and zeros in a PN-code are approximately equal and evenly distributed in time so that the spectrum is substantially flat. If two parallel matched-filters operating each with code A and B are applied to the sum of PN-code A and PN-code B then a correlation peak is outputted separately for each code match. Note that if PN-codes A and B are mutually orthogonal then independent correlation peaks will appear in each matched-filter output.

The CDMA detector 12 employs a code-matching filter to determine which code correlates with the input signal producing a correlation peak output, thereby determining which device 1 is transmitting at that time. The CDMA detector 12 uses a fast multiplexer design to correlate multiple codes using a transposed-form FIR (Finite Impulse Response) architecture as can be found in, for example, the circuit of Figure 14 of *CDMA Matched Filter Implementation in Virtex*

*Devices*, Xilinx Application Note 212, January 10, 2001. This matched-filter architecture can be implemented in hardware such as high-speed parallel channel DSP, ASIC, or FPGA chips.

Another feature of various embodiments of the invention is for each channel pair processor 6 do direct I/Q demodulation (See Figures 3A and 3B) or direct amplitude/phase demodulation (See Figure 3C) without the use of an LO and IF signal. This can simplify the design of channel pair processor 6 and not require an intermediate receiver stage per channel, but still utilizes an RF band-pass filter 19 in each element 3 to be precisely tuned to the desired radio frequency of the transmitter device 1. The direct I/Q demodulation approach is outlined in Figure 3B and involves a direct I/Q demodulator circuit 23, which requires as input the antenna RF signals (after an LNA 18 and band-pass filter 19) and generates the demodulated composite signals as $I(t)$ and $Q(t)$ which are then further de-spread and decoded to determine the transmitter signals components as $I_i$ and $Q_i$. Alternatively, another method outlined in Figure 3C is to use a Phase/Amplitude detector 26 to determine the direct demodulated phase and amplitude composite signals $\Phi(t)$ and $A(t)$. These signal outputs are then decoded to determine the transmitter signal components as $\Phi_i$ and $A_i$. The latter approach requires that phase and amplitude signals be digitally sampled, and that phase ambiguities be resolved in CDMA processor 12.

Another feature of various embodiments of the invention is for each radio receiver element 3 to process an Amplitude Shift-Keying (ASK) modulated signal from each transmitting device 1. For this feature, the PN-code modulation must be ASK. The type of ASK signal used can be a pulsed ASK signal (i.e. on-off type) or can have a varying amplitude. The output of the matched filter will be a correlation peak proportional to the amplitude difference of the ASK modulation.

Another feature of various embodiments of the invention, is for each receiver element 3 to process the varying frequency of a Chirped, frequency hopped, or Frequency Shift-Keyed (FSK) signal from each transmitting device 1. This applies also to a transmitting device 1 that can periodically switch carrier frequencies. For this feature, the PN-code modulation is ASK or FSK based. The frequency of the IF carrier signal is measured at the sum signal using one of several - methods such as pulse counting, edge counting, etc. The frequency estimate is then used in the locator operation to estimate the location. Changes in carrier frequency provide additional information to calculate the location of the transmitter by helping to resolve phase ambiguities, and frequency diversity making the location calculation resistant to phase errors caused by multi-path effects.

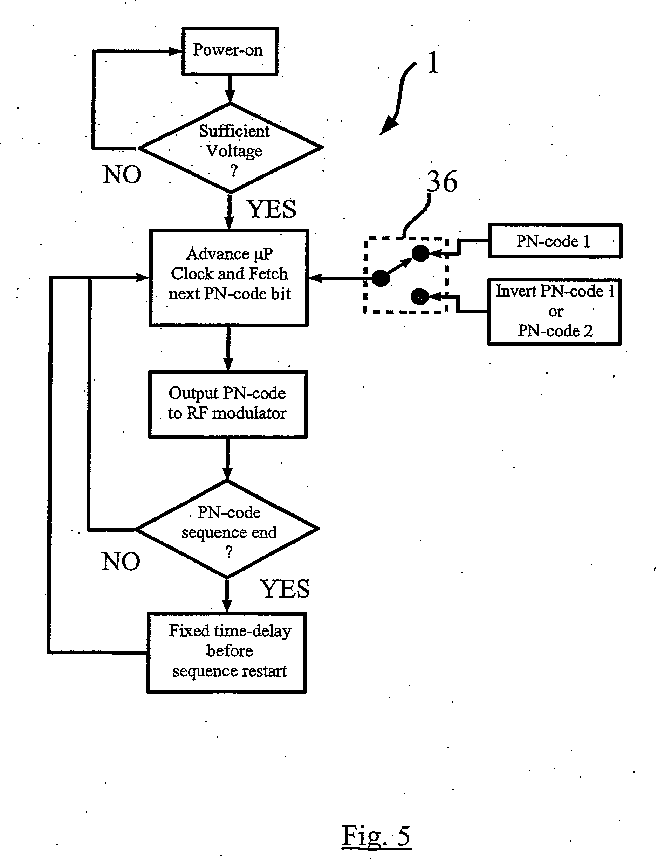

An exemplary operation flowchart of transmitting device 1 is illustrated in Figure 5. After the transmitter device 1 powers-up, the transmitter $\mu$P 34 requests a PN-code bit sent from a LFSR storage device 34a or PROM storage device 35b. The data switch 36, when activated, will switch between independent PN-codes of the same length and in the same order of the sequence. This fetched code bit is then modulated with the transmitter circuit RF carrier wave and transmitted. When the PN-code sequence comes to an end then in the $\mu$P 34 fetch process, then the PN-code sequence is restarted after a programmed time delay. A time delay is measured in bits and is determined by the timing of other simultaneously transmitted codes by the same $\mu$P 34.

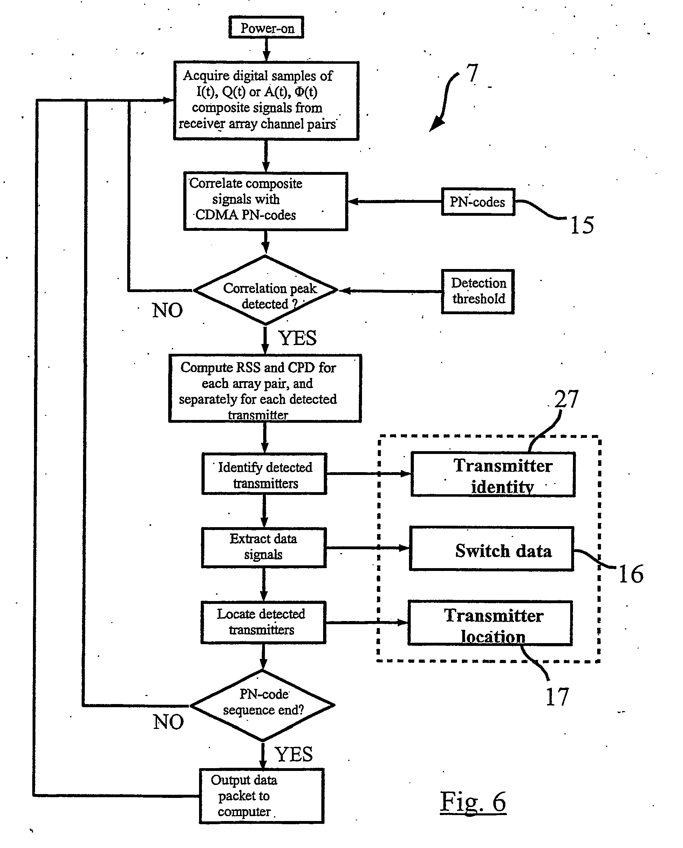

The operation flowchart of the CDMA processor 12 is illustrated in Figure 6. After transmitter device 1 powers-up, excitation signals from the active transmitter device 1 are sent to the receiver element 3. These received signals are processed to determine which PN-codes are present in the input signals. Transmitters are detected when the amplitude output of the matched filter in the CDMA processor 12 exceeds a preset threshold. Of the devices that are detected via their PN-codes, switch data bits are extracted by determining code-inversions or code-switches, and subsequently their XYZ position is calculated. This identity/switch/location data is assembled into a data packet and output to the computer system 8 (or equivalent) that is associated with the receiver array assembly 3 for display on a three-dimensional display unit 9, 10.

In the method of Figure 6, a relative-amplitude and phase-difference model is used to calculate the position of each transmitting device 1. It is to be noted that the free space between devices 1 and the array of receiver units 2 (see, for example, Figures 1A and 1B) comprises an RF impedance that is distributed uniformly in the XYZ space. The signal of each active radio-transmitting device 1 is received by all of the elements 3, and the strength of each received signal is inverse-square related to the distance from the active radio-transmitting antenna 39 to the receiver antennas 4. Also, the phase-difference of the received signal from each transmitting device 1 is directly related to the change in distance between any pair of receiver elements 3,4. After matched-filtering the received signals with the PN-code from each radio-transmitting device 1, the relative-amplitude and phase-difference of each transmitting device 1 can be determined. Calculations then determine the active position of a given transmitter relative to the receiver array plane 2, to be presented on an independent XYZ coordinate display unit 9, or an inset XYZ coordinate display unit 9b (Figures 1A and 1B). In this fashion a plurality of active radio transmitting devices 1 can be tracked substantially simultaneously.

The simplest configuration is the two-dimensional (herein referred to as XY) tracking example. The XY array (as shown in Figure 1A and 1B) consists of four receiver elements (denoted 1, 2, 3, and 4 and labeled counter-clockwise starting from the top right corner of a square array) and are paired into element groups (1,2), (2,3), (3,4), and (4,1). The paired receiver elements are denoted as the subscript "k" (such that "k" has values 1, 2, 3, and 4) for a total of four pairs of receiver elements. After the signals are digitally sampled and matched-filtered the relative-amplitude and phase differences for each pair are computed as $A_i$ and $\Phi_i$ for each transmitter "i" (as in equations 4 and 5). For all values of

$A_i$ that exceed a specified threshold indicates that that transmitter "i" had been detected, and the phase differences $\Phi_i$ can be used for the approximate positioning calculations for XY coordinates given by the following formulae:

$$X_i = R_x(\Phi_{1,i} - \Phi_{2,i} - \Phi_{3,i} + \Phi_{4,i})\lambda_i / 2\pi \ , \qquad (7)$$

$$Y_i = R_y(\Phi_{1,i} + \Phi_{2,i} - \Phi_{3,i} - \Phi_{4,i})\lambda_i / 2\pi \ , \qquad (8)$$

Where $R_x$ and $R_y$ are scale factor values that are determined by calibration, and $\lambda_i$ is the transmitter signal wavelength. In the above equations, the two-dimensional coordinates $X_i$ and $Y_i$ can be determined using four receiver elements, for a multiple number of transmitters "i". The coordinates are an efficient and good approximation for the exact X and Y coordinates for a radio-transmitting device at very close range to the receiver array, moreover compensating for occlusion effects.

In the 3-dimensional model (herein referred as the XYZ model), the simplest example uses the same configuration as the XY tracking example, and relative amplitude and phase-differences are similarly measured using equations (4) and (5) for each radio-transmitting device "i". The CDMA processor 12 will compute the correlation peaks as phase differences from each of the array elements pairs, which here are labeled here as $\delta_{1,i}$, $\delta_{2,i}$, $\delta_{3,i}$, and $\delta_{4,i}$. The device locator 14a then employs the following operation (For other operations see also *A Synthesizable Low Power VHDL Model of the Exact Solution of Three Dimensional Hyperbolic-Positioning System*, by R. Bucher and D. Misra, Technical Proceedings to the 2000 International Conference on Modeling and Simulation of Microsystems, March 2000) to compute the three-dimensional X, Y, and Z coordinate position of the radio transmitter to the array of receiver units 2:

$$\delta_{1,i} = (\Phi_{2,i} - \Phi_{1,i})\lambda_i / 2\pi \ , \qquad (9)$$

$$\delta_{2,i} = (\Phi_{3,i} - \Phi_{2,i})\lambda_i / 2\pi \ , \qquad (10)$$

$$\delta_{3,i} = (\Phi_{3,i} - \Phi_{1,i})\lambda_i / 2\pi \ , \qquad (11)$$

$$\delta_{4,i} = (\Phi_{4,i} - \Phi_{3,i})\lambda_i / 2\pi \ , \qquad (12)$$

$$A_i = (\delta_{2,i}(x_2 - x_1) - \delta_{1,i}(x_3 - x_1))/(\delta_{1,i}(y_3 - y_1) - \delta_{2,i}(y_2 - y_1)) \ , \qquad (13)$$

$$B_i = (\delta_{4,i}(x_2 - x_3) - \delta_{4,i}(x_4 - x_3))/(\delta_{3,i}(y_4 - y_3) - \delta_{4,i}(y_2 - y_3)) \ , \qquad (14)$$

$$C_i = (\delta_{1,i} - \delta_{2,i})\delta_{1,i}\delta_{2,i} / (2(\delta_{1,i}(y_3 - y_1) - \delta_{2,i}(y_2 - y_1))) \ , \qquad (15)$$

$$D_i = (\delta_{3,i} - \delta_{4,i})\delta_{3,i}\delta_{4,i} / (2(\delta_{3,i}(y_4 - y_3) - \delta_{4,i}(y_2 - y_3))), \qquad (16)$$

$$X_i = (D_i - C_i)/(A_i - B_i) , \qquad (17)$$

$$Y_i = A_i X_i(t) + C_i , \qquad (18)$$

$$E_i = (\delta_{2,i})^2 + 2(x_3 - x_1)X_i + 2(y_3 - y_1)Y_i , \qquad (19)$$

$$Z_i = \sqrt{E_i^2 - 4\delta_{2,i}((x_1 - X_i)^2 + (y_1 - Y_i)^2)} / 2|\delta_{2,i}| , \qquad (20)$$

Equations (9) to (20) identify a position calculation operation that utilizes the coordinates of four receiver antennas as $(x_1, y_1),(x_2, y_2),(x_3, y_3),(x_4, y_4)$ on a array plane to determine the position of the transmitters identified as "i", for one to a plurality of "N" transmitter devices 1 (note that $z_1 = z_2 = z_3 = z_4 = 0$ on the array plane).

Another feature of various embodiments of the invention is to determine the position of multiple transmitter devices 1 based on an array with more than four receiver units 2 (see Figure 1A and 1B). If an array is constructed and configured with more than four receiver units 2 (i.e. with more elements than the XY and XYZ tracking examples described earlier) then an "over-determined" set of equations will result for the calculation of the OXY or XYZ positions of each transmitter device 1. Using the calculation methods of linear or non-linear least-squares, an operation can be formulated to compute the optimum position of multiple transmitter devices "i" based on antenna arrays configuration exceeding four of antennas 4.

another feature of various embodiments of the invention is the adaptive detection and synchronization of PN-codes with the transmitting devices 1 in the event that the device PN-code "chipping" rate differs slightly from chipping rate inside the CDMA detector and processor 12. When a PN-code is digitally sampled using the ADC 24 of each signal channel (i.e. in the circuit from antenna 4 to ADC) the ADC 24 will over-sample the signal typically by a factor of five to ten times faster than the PN chip-rate. This ensures that a correlation peak will form a triangular shape when output from the matched-filter. If there is a slight-discrepancy in chipping frequency between the radio transmitting device 1 and CDMA detector 12, then a correlation triangle will appear distorted but will form a distinct peak inside the PN-code period. The degree of tolerance discrepancy in chipping frequency can improve with a higher over-sampling rate of the ADC to the PN-code-chipping rate.

Another feature of various embodiments of the invention is the use of a parallel transposed-form FIR matched-filter as part of the CDMA detector 12. The circuit of Figure 14 of *CDMA Matched Filter Implementation in Virtex Devices*, Xilinx Application Note 212, January 10, 2001 illustrates the design of this filter implemented to allow parallel detection of one or a plurality of PN-codes at high speeds. This filter uses a "folded" structure and is designed to share firmware resources and allow PN-code multiplexing to detect up to "N" PN-codes in a single shared code period, using "R" code taps and accumulators, and N/R filter "folds" per code period. For example, if a channel signal is sampled at "S" MHz then this filter design can sample up to N different PN-codes (representing N distinct transmitting devices 1) at a multiplexed rate of "S*N" MHz. This method of designing a matched filter is flexible and a necessary trade-off of processor resources, depending on the number of transmitting devices 1 required, and the PN-code-chipping rate. This design generally requires more hardware logic space at fewer clock cycles and can be easily implemented inside a standard Field-Programmable Gate-Array ("FPGA") processing chip.

Another arrangement of CDMA detector 12 is to construct N parallel structures per channel for the detection and processing of N multiple codes. In this arrangement, the CDMA detector 12 serially cycles through M*K samples and codes with code length M and signal over-sample rate K. The matched filter is a single code tap and accumulator per channel, and the clocked multiplex rate is S*M*K. This arrangement uses fewer logic resources but requires more serial clock cycles to implement inside an FPGA processing chip.

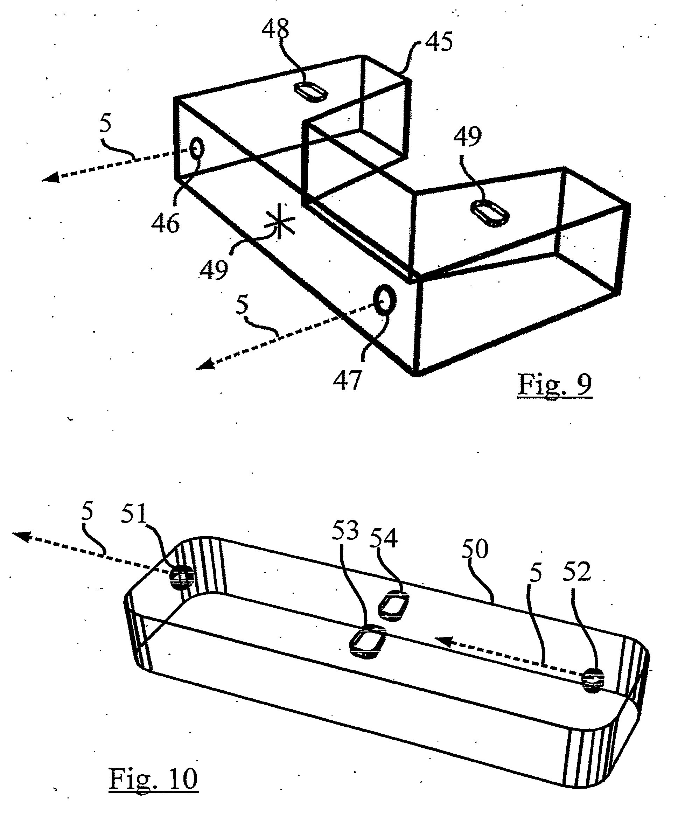

Another feature of various embodiments of the invention includes a PN-code that can be used to convey a binary communication link between the transmitting device 1 and array of receiver units 2. A mouse is shown in Figure 9 that incorporates a plurality of radio-transmitting devices 1. Devices 1 in the mouse of Figure 9 have switches 36 (switches 36 being discussed earlier with reference to Figures 4A and 4B) to convey switch event data (such as a switch from a hand-held device) to the CDMA detector 12. Binary switch events (e.g. like a right or left mouse click) can be conveyed in the PN-code signal using two methods: 1) bit-inversion modulation, or 2) switching from one PN-code to another PN-code (see Figure 5). If a switch event occurs using a bit-inversion modulation (method 1) then depressing switch 36 on the transmitting device 1 will invert the PN-code in the transmitting device's $\mu$P 34. The CDMA detector 12 will then detect the same PN-code but recognize the bit-inverted PN-code as an inversion of the correlation peak, thereby allowing the CDMA detector 12 to detect the switch event as a sign change in the matched-filter output. If a switch event occurs by altering the PN-code (method 2), then depressing switch 36 on the transmitting device 1 will alter the PN-code generated in the transmitter's $\mu$P 34. The CDMA detector 12 will be assigned code pairs per transmitting device and then recognize the code switch as a data event. Switching events can be recognized as often as every PN-code period.

Variations of the radiated signal-strength (RSS) caused by signal occlusion and/or multi-path effects can cause amplitude and phase variations to appear in the received signals 5 in each receiver array element 3,4,6. This occurs because blocked or reflected signals 5 traverse a slightly longer path when received at the array elements 4. This problem can be addressed by using a "correction" formula that relates variations in RSS to variations in carrier phase difference, hence these corrections can be applied to the XY or XYZ coordinate calculations (equations 7-8 and 9-20). RSS measurements are affected most by signal occlusion and multi-path so that a normalization calculation will restore the relative RSS between signals received at the receiver array elements. Normalized RSS is used to correct for small changes that occur in the phase-difference measurements caused by the signal requiring to transverse a longer path. This method of correction is limited only to small RSS and phase variations typically if the transmitter and occlusion/multi-path effects are further away from the array. The normalization calculation also introduces nonlinear distortion effects in the XYZ position calculation when a radio-transmitting device 1 is positioned near one or more of the receiver elements 3. This occurs because the sum of all received signals is not constant amplitude over the radio receiving array area but instead gets much larger near the receiver elements 4.

Those of skill in the art will now recognize that there is little difference between 2D and 3D modes of the invention because the 2D mode can assume that a fixed Z coordinate in 3D mode had been measured. For example, the transmitter device 1 can be a writing stylus and may write on a surface that is transmittable (and not absorptive) of RF electromagnetic waves. If 3D is chosen then the controller proceeds to calculate a Z coordinate and outputs the data to the computer. If the 3D mode was not chosen the hardware automatically switches to 2D and ignores any 3D coordinate data.

In the case where three-dimensional positioning is calculated to present transmitting device 1 locations on a display area 9b by an XY or XYZ display unit 9 (such as an LCD screen or video monitor) it is presently preferred to employ a method to correct for position errors. A software operation can be used to correct for inaccuracies of misalignment between the receiver array and a display area, to rescale the active receiving area to the display area, or correct offset errors in the receiver/analog hardware. The operation can be executed separately for any transmitting device 1 to reduce accuracy differences between specific controller types. The user will move a transmitting device 1 to a minimum of two points on the lower left and upper right of the display area to "rescale" the reported coordinates to these points. Other methods can be implemented by moving to a displayed grid of points in 3D space to provide more calibration detail.

The following operation can be used to: correct inaccuracies due to receiver unit 2 misalignment with display 9b; rescale the active receiver area to the display area; or correct offset errors in the receiver analog hardware. The operation can be executed separately for 2D and 3D mode to eliminate accuracy differences between the two modes. The user will be requested to touch the lower left and upper right display area to "rescale" the reported coordinates to these points.

$$X_C = R_X(X - X_L)/(X_U - X_L)\,, \qquad (10)$$

$$Y_C = R_Y(Y - Y_L)/(Y_U - Y_L)\,, \qquad (11)$$

$$Z_C = R_Z(Z - Z_L)/(Z_U - Z_L)\,, \qquad (12)$$

Where:

$X_C, Y_C, Z_C$    are the corrected position coordinates

$R_X, R_Y, R_Z$    are the resolution limits of the X, Y, and Z axes

$X_L$, $Y_L$, $Z_L$    are the coordinates of the lower calibration point

$X_U$, $Y_U$, $Z_U$    are the coordinates of the upper calibration point

The operation could also enable the system to designate selected 2D or planar transmitters 1 and 3D moving transmitters 1 (like a pen input device or a 3D game input device). This could be accomplished by reporting 2D pen digitization points only in areas designated for pen sensing, and doing the same for 3D transmitter sensing. This feature would be especially useful as a means of rejecting pen inputs in an area (potentially the entire screen) designated for handwriting and other stylus-like input, and allow another device like a 3D or even another stylus device to operate independently.

Referring again to Figures 4A and 4B, the entire analog circuitry for active radio-transmitting device(s) can be embodied in one custom RF ASIC or RF microprocessor and requiring very few logic gates to implement PN-code generation. That is, the Power Supply circuit 32, the RF signal modulator 33, pulse shaping 38, and the front-end analog circuits (18 to 24) can all be executed in an ASIC or programmable μP with a separate or built-in RF transmitter. The components in Figures 3A, 3B, and 3C can be created as RF and analog hardware that can be embedded in a PCB behind the array of receiver units 2 itself. Similarly, all digital components of this CDMA processor function (shown in Figures 2 and 6) can also by prepared as firmware to be downloaded into a microcontroller or FPGA chip. The PN-code ROM 35 or LFSR 35, and CDMA processing Unit 12, XYZ location calculation 7, and data signal extraction 14, can be coded into firmware for download into a FPGA, or microcontroller. These possibilities can reduce the device size and result in a device and controller of small dimensions. The use of a custom ASIC, or readily available microprocessor or FPGA chips also makes the transmitting devices 1 more rugged by reducing component connections, and it minimizes overall power consumption.

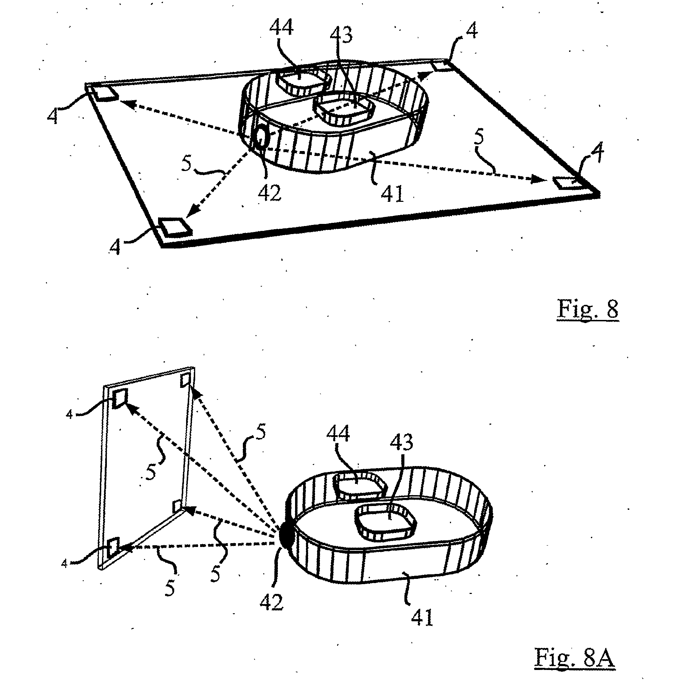

The active radio-transmitting device 1 or a combination thereof can take any of several forms. As shown in Figure 8 and 8a, a radio transmitting 3-dimensional mouse 41 can have a single radio transmitting device 42 (that is itself based on device 1) to perform its function. Mouse 41 can move in three-dimensional space and will always provide a positioning cursor in the view area of the array of receiver units 2. When mouse 41 is used with the system of Figure 1, cursor 11a will indicate information relevant to position of mouse 41 in three-dimensional space and providing the information to an XY or XYZ display as shown in Figures 1A and 1B. The contact point will radio transmit to the receiver array surface 2 with a RF modulated PN-code signal 5 from antenna 39 located at transmitting device 42. The 3D mouse 41 is equipped with the right button 44 and the left button 43, and are designed as moveable buttons to yield the clicking status.

Referring now Figure 9, a tilt-joystick controller 45 includes at least two radio-transmitting devices 46,47 (that are themselves based on device 1) within the body of tilt-joystick controller 45 such that the devices 46,47 are placed near or at the extreme ends of the tilt device. Each device 46, 47 will transmit a different PN-code such that each device is located independently and substantially simultaneously by the CDMA processor 12. The locator 14a will then compute a relative tilt between the devices and as a forward tilt angle and a side tilt angle. The position of the tilt-joystick is also determined as the average position 48 of the radio transmitting devices 46,47. The joystick can operate in either tilt-joystick mode or mouse mode, in which event data is communicated from a left switch button 49 to the left transmitter 47, and the right switch button 48 to the right transmitter 46, where modulated codes are generated.

Referring now to Figures 10, a pointer controller 50 includes at least two radio-transmitting devices 51, 52 (that are themselves based on device 1) within itself such that the devices are placed along a linear path. Each device 51,52 will transmit a different PN-code such that each device is located independently and substantially simultaneously by the CDMA processor 12. The locator 14a will then compute a linear direction determined by an inner the outer device locations, and the intersection point of the direction line with the viewing plane is presented on an XYZ display screen 9,10. This allows the user to point or aim at a displayed object shown on the display screen 9,10. One or more switch buttons can be pressed, in which event data is communicated from switch buttons 53 and 54 to the transmitters 51 and 52 respectively, where modulated codes are generated.

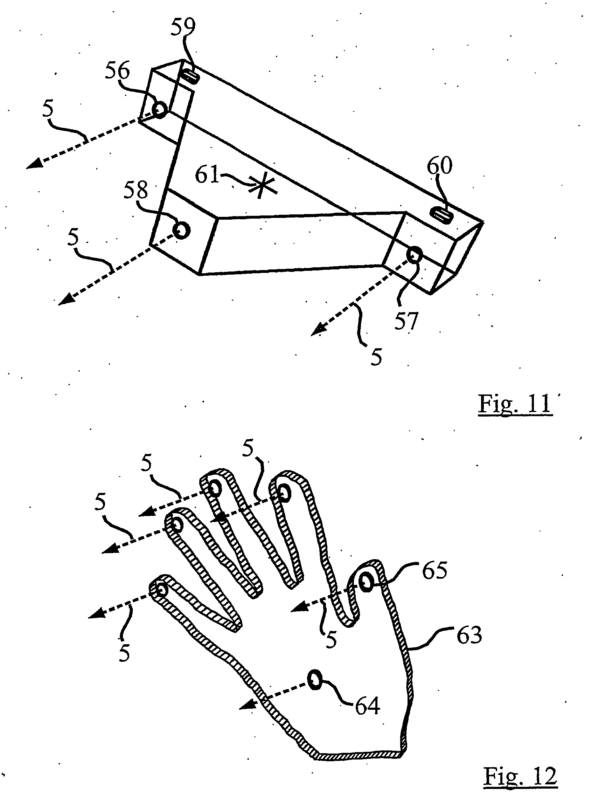

As shown in Figure 11, a six degree-of-freedom (6DOF) interface device 55 can include at least three tadio-transmitting devices 56,57,58 (which themselves are based on device 1) within itself such that devices 56,57,58 are placed near or at the vertexes of a triangular plane. Each device 56,57,58 transmits a different PN-code such that each device 56,57,58 is locatable independently and substantially simultaneously by the CDMA processor 12. The locator 14a computes relative angles between the devices based on their XYZ locations. The orientation angles computed will be one or more of Roll, Pitch, and Yawing angles of a model aircraft, or a similar object. The position of the 6DOF object is also determined as the average position 61 of the radio transmitting devices 56,57,58. Switch buttons may exist on the object 59,60 and send event date to one or more transmitter devices 56,57,58 where modulated codes are generated.

As shown in Figure 12, a gesture interface 63 can include at least one radio transmitting devices 65 (which themselves are based on device 1) such that the devices are placed on the hand or glove 62 to indicate the relative position of fingers to a reference point 64 on the glove 62. Each device transmits a different PN-code such that each device is located independently and simultaneously by the CDMA processor 12. The gesture interface locator 14a computes relative changes in XYZ position between the devices. The changes of the finger-tip transmitter 65 locations relative to a reference point 64 will be compared with stored position patterns and be recognized as specific hand gestures.

While only specific combinations of the various features and components of the present invention have been discussed herein, it will be apparent to those of skill in the art that desired subsets of the disclosed features and components and/or alternative combinations of these features and components can be utilized, as desired. For example, it is to be stressed that the configurations and quantities of transmitter devices 1 and receiver units 2 is not particularly limited, and can be chosen and structured for any given application in any desired manner. Thus, where it is only desired to determine a location of a single object in a single plane, the array can be limited to two receiver units 2 (coupled to one channel pair processor 6) that interact with one transmitter device 1 that is affixed to that single object. In contrast, where it is desired to track the location and/or movement of a plurality of objects in a three dimensional space, then the array can consist of a plurality of receiver units 2 (pairs of which can each be coupled to a respective channel pair processor 6) that are configured to interact with a plurality of transmitter devices 1, each affixed to its own object.

It should now be apparent to those of skill in the art that teachings herein can be used in a wide variety of real-world applications. For example, gesture interface 63 of Figure 12 can be used as a sophisticated human interface device for computer applications, obviating the need for a pointing device or mouse, and potentially the need even for a computer keyboard, as software used on a computer system connected to gesture interface 63 can be programmed to respond to a sophisticated range of hand gestures that could-include the keys on a computer keyboard. In this manner, gesture interface 63 can mimic an actual computer keyboard.

It is also contemplated that transmitting devices, such as transmitting device 1, can be fixed while an array of receiver units 2 are actually mobile and/or actually worn or carried by a user. Such a configuration could be used to allow a user to obtain precise positioning information. For example, an array of receiver units 2 could be mounted on a personal digital assistant (or other portable computing device) that is carried by an individual. At the same time, a plurality of transmitting devices 1 can be mounted throughout a shopping mall. As the user walks through the shopping mall, the personal digital assistant can provide précising mapping information to the user, indicating to the user exactly where the user is located within the shopping mall. Other applications of having mobile receiver units 2 will now occur to those of skill in the art. It should now also be apparent that applications can exist where both transmitting devices 1 and an array of receiver units 2 are both mobile.

It is also contemplated that a system of transmitting devices 1 and an array of receiver units 2 can be configured so that, in at least one mode of operation, each are intended to be fixed in relation to the other, with a computing device associated with the system being configured to detect whether any movement in the fixed relation occurs. For example, such a system can be used in a burglar alarm system, where transmitting devices are affixed to doors and windows, and the array of receiver units are affixed to a wall or other stationary fixture proximal to the transmitting devices. When the burglar alarm system is "armed", the movement of a door or widow can be detected and provided as a signal to activate the alarm.

the configuration of receiver units 2 in Figure 1C depicts a three-dimensional cube of receiver units 2. Such a configuration of receiver units 2 can be used in a room, or multiple rooms of a building. Transmitting devices 1 that are active within the room can then be affixed to objects (or persons), to track their location within the room (or the entire building if the building is so equipped.). In this example, display 9 in Figure 1C can be replaced with computer tracking software that keeps track of where those objects are located in that room. This particular system can be duplicated in each room of the building, and wherein each array of receiver units 2 in the building are linked together, thereby providing a means for tracking the location of objects (or persons) as they move throughout the entire building. For example, an entire shopping mall could be outfitted with a plurality of arrays of receiver units 2, and individual customers provided with transmitting devices 1, thereby providing a means to track the movement, and thereby the shopping patters, of particular individuals.

It is also contemplated that every transmitting devices 1 that is operable with multiple different arrays of receiver units 2 can be uniquely coded, thereby providing a means to track every individual transmitting device 1 in a centralized or master database. Such unique coding can include encryption or other security measures to allow them to be properly authenticated to operate with corresponding receiver units 2.

It is also contemplated that the teachings herein can be applied to surgical procedures. For example, transmitting devices .1 can be affixed to a surgical instrument or implantable medical device and to various biological landmarks inside the patient. An array of receiver units 2 proximal to the operating arena can then be connected to a computing device to give data as to where the surgical instrument or medical device is located in relation to the biological landmark. For example, a small transmitter device 1 (or a plurality thereof) can be affixed at a blockage point in an artery. A second transmitter device 1 (or a plurality thereof) can be affixed to a sent to be implanted at the blockage point. During insertion of the stent, the array of receiver units 2 can communicate with the stent and the blockage point to ensure proper locating of the stent.

Another example of applicability of various embodiments herein is the field of industrial robotics. An individual robot on an assembly line can be outfitted with a plurality of transmitting devices 1, typically located at points on the robot that can move. The array of receiver units 2 and associated processing electronics that are proximal to the robot can then determine, with great precision, where the robot is located in an absolute terms. This location data can then be fed back to ensure precise locating of the robot is effected in the software and machinery used to move the robot, and thereby obviate the limitations of relying on relative positioning determinations that are effected by measuring the number of turns of a servo motor controlling the robot.

Another example of applicability of various embodiments of the invention is the emerging field of immersive reality, wherein a user is equipped with a virtual reality display helmet and then equipped with one or more gesture interfaces, such as gesture interface 63. Where the user has a transmitting device 1 affixed to all limbs and fingers, a computing device that interconnects the array of receiver.units 2 and the virtual reality display helmet can present an immersive reality experience to the user.

The above-described embodiments of the invention are intended to be examples of the present invention and alterations and modifications may be effected thereto, by those of skill in the art, without departing from the scope of the invention which is defined solely by the claims appended hereto.

**Claims**

1.   A system for sensing position comprising:

   at least one transmitting device (1) operable to transmit a radio signal (5) and wherein said radio signal of each of said transmitting devices is spread-spectrum coded and has a unique pseudo-noise (PN) code signal structure using longer PN-codes;
   at least four processing channels (6) each comprising a pair of receiver units (2) in spaced relation to each other, each receiver unit operable to receive a different version of the radio signal in the form of a pseudo-noise code modulated carrier signal; and
   an electronic circuit coupled to the processing channels (6) and operable to determine a location of the radio transmitting device in relation to the receiver units based on a measurement of the radiated-signal-strength (RSS) and of the carrier signal phase delay between each of the different versions of the radio signal for each pair of receiver units (2);
   said electronic circuit further comprises an analog-to-digital converter (ADC) (24) for each processing channel operable to over-sample the radio signal by a factor at least five times faster than the PN chip rate of said radio signal.

2.   The system of claim 1 further comprising at least one additional radio transmitting device, each of the radio transmitting devices being operable to transmit a radio signal orthogonal to each of the other radio signals transmitted by the other radio transmitting devices, the electronic circuit being further operable to distinguish each of the radio transmitting devices from the other radio transmitting devices based on the orthogonal radio signals, the electronic circuit being further operable to determine a location of the radio transmitting devices substantially simultaneously based on said signal structure of the radio signal.

3.   The system according to claim 2 wherein an antenna associated with each of the receiver units are spaced apart at a distance of about one-half of a wavelength of the radio signal.

4.   The system according to any one of the preceding claims, wherein at least one of said receiver units (2) of one of said pairs of receiver units is shared with another one of said pairs of receiver units.

5.   The system according to claim 4 wherein the spread spectrum technology is selected from the group consisting of direct sequence spread spectrum signals, frequency hopping spread spectrum signals, time hopping spread spectrum signals, linear frequency sweeping (chirp) signals, and hybrid signals.

6.   The system according to claim 2 wherein the radio signals are based on code division multiple access (CDMA) and the orthogonal codes are said unique pseudo-noise (PN) codewords assigned to each of the transmitting devices.

7.   The system according to claim 1 wherein the transmitting device is affixed to a pointing device and the electronic circuit is coupled with an input device on a personal computer having a display device and such that the pointing device is operable to move a cursor on the display device.

8. The system according to claim 7 wherein the pointing device includes at least one button for user actuation and the radio signal transmitted by the affixed transmitting device is assigned to said pointing device, and wherein an actuation of the button is transmitted to the receiver units via using one of the techniques of inverting the PN codeword for at least one bit-period, and switching to a different PN codeword for at least one bit period.

9. The system according to claim 1 wherein a power supply incorporated into the transmitting device is selected from the group consisting of a battery, a solar cell, a coil operable to receive energy from an EM powering field radiating proximal to the power supply, and a coil operable to induce electrical energy from a magnetic field by mechanical motion.

10. The system according to claim 1 comprising only two of the receiver units and the location is expressed in a single-dimension.

11. The system according to claim 1 wherein at least one of the transmitting devices and the receiver units remain fixed during operation.

12. The system according to claim 1 comprising three of the receiver units arranged in a triangular format, the electronic circuit operable to receive a first input from a first pairing of the three receiver units and further operable to receive a second input from a second pairing the three receiver units, the pairings having only one of the receiver units in common, the electronic circuit further operable to determine a two dimensional position of the transmitting device based on a comparison of the first input and the second input.

13. The system according to claim 1 comprising four of the receiver units arranged in a rectangular format, the electronic circuit operable to receive four separate inputs from four respective pairings of the four receiver units, the electronic circuit further operable to determine a three dimensional position of the transmitting device based on a comparison of the separate inputs.

14. The system according to claim 13 wherein the rectangular format is a plane arranged around a periphery of a computer display.

15. The system according to claim 1 comprising eight of the receiver units arranged in a cube, the electronic circuit operable to receive eight separate inputs from eight respective pairings of the eight receiver units, the electronic circuit further operable to determine a three dimensional position of the transmitting device in relation to the cube based on a comparison of the separate inputs.

16. The system according to claim 1 wherein the electronic circuit comprises a channel pair processor connected to the receiver units, a detector and position calculator connected to the channel pair processor, and an output device for presenting the location to an electronic peripheral attachable to the output device.

17. The system according to claim 1 wherein the electronic peripheral is a computer and a display device, the computer being configured to present a representation of the location on the display device.

18. The system according to claim 16 wherein the channel pair processor comprises an I/Q demodulator coupled to the receiver unit to receive input therefrom, the channel pair processor further comprising an analog-to-digital converter coupled to the I/Q demodulator for converting analog signals therefrom to digital signals; the channel pair processor further comprising a phase data calculator for determining amplitude and phase information from the digital signals and for outputting the amplitude and phase information to the detector and position calculator.

19. The system according to claim 18 wherein the system is based on CDMA and the detector and position calculator comprises:

a CDMA processor for receiving the amplitude and phase information;
a transmitter detector coupled to the CDMA processor and for determining an identity of the transmitting device;
a data signal extractor coupled to the transmitter detector for determining any specific data embedded in the radio signal respective to the transmitting device; and,
a device locator coupled to the data signal extractor for determining a position of the transmitting device.

20. The system according to claim 1 wherein the transmitter device comprises a power supply, orthogonal code generator, a VCO generator interconnected by an RF signal modulator; the transmitter device further comprising a pulse shaping module for shaping a waveform output from the RF signal modulator; the transmitter device further comprising an antenna connected to an output of the pulse shaping modulator for outputting the radio frequency.

21. The system according to claim 20 wherein the orthogonal code generator generates PN codes and is comprised of a PN-code chip coupled to a microprocessor, the PN-code chip for instructing the microprocessor which PN code is to be generated for the transmitting device.

22. The system according to claim 21 wherein the orthogonal code generator further comprises a switch for selectively changing the PN-code to another PN-code when the switch is activated.

23. The system according to claim 1 wherein the transmitting device is incorporated into a computer interface selected from the group consisting of a mouse, a tilt-joystick, a pointer controller, a six-degree-of-freedom interface, and a gesture interface.

24. The system according to claim 1 wherein the transmitting device is incorporated into a surgical instrument.

25. The system according to claim 1 wherein the transmitting device is incorporated into an industrial robot.

26. The system according to claim 1 wherein the receiver unit comprises an antenna and a receiver element.

27. The system according to claim 1 wherein the receiver element comprises a low-noise amplifier connected to the antenna, a bandpass filter connected to the low-noise amplifier, and an intermediate frequency amplifier connected to the bandpass filter for outputting to the electronic circuit.

28. The system according to claim 1, wherein said system is a radio transmitting system for identifying and locating one or more radio transmitting devices each comprising one of said transmitting devices in a radio transmitting area, including:

- a signal propagating medium for conducting signals throughout the radio transmitting range;
- at' least one of the radio transmitting devices including means for producing a radio transmitting signal corresponding to said radio signal and coupling the signal to the propagating medium;
- each radio transmitting signal identifying the respective device by means of said unique PN-code signal structure;
- signal receiving means each comprising at least one of said receiving units and being associated with the sensing area and connected to the propagating medium to receive at least one radio transmitting signal from the one or more radio transmitting devices; and
- means for decoding the radio transmitting signal to identify at least one of the radio transmitting devices.

29. The system of claim 28, wherein said electronic circuit is further operable to determine the position of at least one of the radio transmitting devices in the radio transmitting range.

30. The system of claim 28, wherein the one or more radio transmitting devices are active devices.

31. The system of claim 30, further including means for generating an energy field in the propagating medium within the radio transmitting range.

32. The system of claim 31, wherein the energy field includes a spread spectrum signal component.

33. The system of claim 31, wherein each of the radio-transmitting devices includes a means to receive a signal through the EM energy field for active radio transmitting device operation.

34. The system of claim 31, wherein the energy field includes an EM field or a magnetic field.

35. The system of claim 34, wherein the propagating medium comprises free space in the radio-transmitting range.

36. The system of claim 34, wherein the propagating medium comprises an occlusion in the radio-transmitting range.

37. The system of claim 32, wherein the spread spectrum signal component is a direct sequence spread spectrum (DSSS) signal.

38. The system of claim 32, wherein the spread spectrum signal component is a frequency hopping spread spectrum (FHSS) signal.

39. The system of claim 32, wherein the spread spectrum signal component modulation is Amplitude Shift Keying (ASK).

40. The system of claim 32, wherein the spread spectrum signal component modulation is Frequency Shift Keying (FSK).

41. The system of claim 28, wherein the unique codes of the one or more radio transmitting devices are orthogonal codes.

42. the system of claim 28, wherein the one or more radio transmitting devices are active devices that generate a radio transmitting signal.

43. The system of claim 28, wherein the radio transmitting signal is an EM signal.

44. The system of claim 43, wherein the propagating medium comprises free space in the radio-transmitting range.

45. The system of claim 43, wherein the propagating medium comprises an EM reflecting and conducting layer in the radio-transmitting range.

46. The system of claim 45, wherein the signal receiver means includes a plurality of spaced-apart signal receivers, and the means for determining the position of each of the one or more radio transmitting devices includes means for calculating the received signal strengths and phase differences of the radio transmitting signals passing through the propagating medium to the plurality of signal receivers.

47. The system of claim 43, wherein the means for decoding and identifying each of the one or more radio transmitting devices includes matched-filtering means for comparing received radio transmitting signals to stored spread spectrum codes of the one or more radio transmitting devices.

48. The system of claim 28, wherein the at least one radio transmitting device comprises a 2-dimensional mouse controller.

49. The system of claim 28, wherein the at least one radio transmitting device comprises a 3-dimensional mouse controller.

50. The system of claim 28, wherein the at least two radio transmitting device comprises a tilting joystick controller.

51. The system of claim 28, wherein the at least two radio transmitting device comprises a "pointer" controller.

52. The system of claim 28, wherein the at least three radio transmitting device comprises a 6-DOF controller.

53. The system of claim 28, wherein the at least two radio transmitting device comprise a gesture interface controller.

54. The system of claim 28, wherein a portion of the radio transmitting devices include a receiver operable to receive wireless instructions to vary operation of the radio transmitting devices.

55. The system of claim 28, wherein a portion of the one or more radio transmitting devices are active devices that generate a radio transmitting signal, and another portion of the one or more radio transmitting devices are active transceiver devices.

56. A method for sensing position comprising:

transmitting a radio signal (5) by at least one transmitting device, wherein said radio signal of each of said transmitting devices is spread-spectrum coded and has a unique pseudo-noise (PN) code signal structure using longer PN codes:

processing said radio signal from said at least one transmitting device in the form of a pseudo-noise code modulated carrier signal by at least four processing channels each comprising a pair of receiver units being in spaced relation to each other, each receiving unit receiving a different version of said radio signal;

over-sampling the radio signal by a factor at least five times faster than the PN chip rate of said radio signal; and

determining a location of the transmitting device based on a comparison of the different versions of said radio signal by measuring of the radiated-signal-strength (RSS) and of the carrier phase delay between each of said different versions of said radio signal for each pair of receiver units.

57. The method of claim 56 further comprising the steps of:

receiving first version of at least one additional radio signal from at least one additional radio transmitting device, the at least one additional radio signal being orthogonal to the radio signal;

receiving a second version of the at least one additional radio signal;

determining a location of the at least one transmitting device based on a comparison of the first and second versions of the at least one additional radio signal.

58. The method according to claim 57 wherein antennas used to perform the receiving steps are spaced apart at a distance of about one-half of a wavelength of the radio signal.

59. The method according to claim 57, wherein at least one of said receiver units (2) of one of said pairs of receiver units is shared with another one of said pairs of receiver units.

60. The method according to claim 57 wherein the spread spectrum technology is selected from the group consisting of direct sequence spread spectrum signals, frequency hopping spread spectrum signals, time hopping spread spectrum signals, linear frequency sweeping (chirp) signals, and hybrid signals.

61. The method according to claim 57 wherein the radio signals are based on code division multiple access (CDMA) and the orthogonal codes are said unique pseudo-noise (PN) codewords assigned to each of the transmitting devices.

62. The method according to claim 56 wherein the transmitting device is affixed to a pointing device and the electronic circuit is coupled with an input device on a personal computer having a display device and such that the pointing device is operable to move a cursor on the display device.

63. The method according to claim 56 wherein the pointing device includes at least one button for user actuation and the radio signal transmitted by said affixed transmitting device is assigned to said pointing device, and wherein an actuation of the button is transmitted to the receiver units via inverting the PN codeword for one bit-period.

64. The method according to claim 56 wherein a power supply incorporated into the transmitting device is selected from the group consisting of a battery, a solar cell, a coil operable to receive energy from an EM powering field radiating proximal to the power supply, or a coil operable to induce electrical energy from a magnetic field by mechanical motion.

**Patentansprüche**

1. System zur Positionserfassung, das umfasst:

wenigstens eine Sendevorrichtung (1), die betreibbar ist, um ein Funksignal (5) zu senden, wobei das Funksignal jeder der Sendevorrichtungen durch ein Spreizspektrum codiert ist und eine eindeutige Pseudorausch-Code-Signalstruktur (PN-Code-Signalstruktur), die längere PN-Codes verwendet, hat;

wenigstens vier Verarbeitungskanäle (6), wovon jeder ein Paar Empfängereinheiten (2) in zueinander beabstandeter Beziehung enthält, wobei jede Empfängereinheit betreibbar ist, um eine andere Version des Funksignals in Form eines mit einem Pseudorauschcode modulierten Trägersignals zu empfangen; und

eine elektronische Schaltung, die mit den Verarbeitungskanälen (6) gekoppelt ist und betreibbar ist, um einen Ort der Funksendevorrichtung in Bezug auf die Empfängereinheiten anhand einer Messung der Richtsignalstärke (RSS) und der Trägersignal-Phasenverzögerung zwischen jeder der verschiedenen Versionen des Funksignals für jedes Paar von Empfängereinheiten (2) zu bestimmen;

wobei die elektronische Schaltung ferner einen Analog/Digital-Umsetzer (ADC) (24) für jeden Verarbeitungskanal enthält, der betreibbar ist, um das Funksignal um einen Faktor überabzutasten, der wenigstens fünfmal schneller als die PN-Chiprate des Funksignals ist.

2. System nach Anspruch 1, das ferner wenigstens eine weitere Funksendevorrichtung umfasst, wobei jede der Funksendevorrichtungen betreibbar ist, um ein Funksignal, das zu den anderen Funksignalen, die von den anderen Funksendevorrichtungen gesendet werden, orthogonal ist, zu senden, wobei die elektronische Schaltung ferner betreibbar ist, um jede der Funksendevorrichtungen von den anderen Funksendevorrichtungen anhand der orthogonalen Funksignale zu unterscheiden, wobei die elektronische Schaltung ferner betreibbar ist, um einen Ort der Funksendevorrichtungen im Wesentlichen gleichzeitig anhand der Signalstruktur des Funksignals zu bestimmen.

3. System nach Anspruch 2, wobei Antennen, die jeweils einer der Empfängereinheiten zugeordnet sind, um eine Strecke von etwa einer halben Wellenlänge des Funksignals beabstandet sind.

4. System nach einem der vorhergehenden Ansprüche, wobei wenigstens eine der Empfängereinheiten (2) eines der Paare von Empfängereinheiten mit einem anderen der Paare von Empfängereinheiten gemeinsam genutzt wird.

5. System nach Anspruch 4, wobei die Spreizspektrumtechnologie aus der Gruppe ausgewählt ist, die aus Direktfolgen-Spreizspektrum-Signalen, Frequenzsprung-Spreizspektrum-Signalen, Zeitsprung-Spreizspektrum-Signalen, linearen Frequenzwobbel-Signalen (Chirp-Signalen) und Hybridsignalen besteht.

6. System nach Anspruch 2, wobei die Funksignale auf einem Codemultiplex-Vielfachzugriff (CDMA) basieren und die orthogonalen Codes die eindeutigen Pseudorausch-Codewörter (PN-Codewörter) sind, die jeder der Sendevorrichtungen zugeordnet sind.

7. System nach Anspruch 1, wobei die Sendevorrichtung an einer Zeigervorrichtung befestigt ist und die elektronische Schaltung mit einer Eingabevorrichtung an einem Personalcomputer gekoppelt ist, der eine Anzeigevorrichtung besitzt, derart, dass die Zeigervorrichtung betreibbar ist, um einen Cursor auf der Anzeigevorrichtung zu bewegen.

8. System nach Anspruch 7, wobei die Zeigervorrichtung wenigstens eine Taste für eine Anwenderbetätigung enthält und das Funksignal, das von der befestigten Sendevorrichtung gesendet wird, der Zeigervorrichtung zugewiesen ist und wobei eine Betätigung der Taste an die Empfängereinheiten unter Verwendung einer der Techniken des Invertierens des PN-Codeworts für wenigstens eine Bitperiode und des Schaltens zu einem anderen PN-Codewort für wenigstens eine Bitperiode gesendet wird.

9. System nach Anspruch 1, wobei eine Stromversorgung, die in die Sendevorrichtung eingebaut ist, aus der Gruppe ausgewählt ist, die aus einer Batterie, einer Solarzelle, einer Spule, die Energie von einem EM-Leistungsversorgungsfeld, das proximal zu der Stromversorgung abstrahlt, empfängt, und einer Spule, die betreibbar ist, um elektrische Energie aus einem Magnetfeld durch mechanische Bewegung zu induzieren, besteht.

10. System nach Anspruch 1, das nur zwei der Empfängereinheiten umfasst, wobei der Ort in einer einzigen Dimension dargestellt wird.

11. System nach Anspruch 1, wobei wenigstens eine der Sendevorrichtungen und die Empfängereinheiten während des Betriebs fixiert bleiben.

12. System nach Anspruch 1, das drei der Empfängereinheiten, die in einem dreieckigen Format angeordnet sind, umfasst, wobei die elektronische Schaltung betreibbar ist, um einen ersten Eingang von einem ersten Paar der drei Empfängereinheiten zu empfangen, und ferner betreibbar ist, um einen zweiten Eingang von einem zweiten Paar der drei Empfängereinheiten zu empfangen, wobei die Paare nur eine der Empfängereinheiten gemeinsam haben, wobei die elektronische Schaltung ferner betreibbar ist, um eine zweidimensionale Position der Sendevorrichtung anhand eines Vergleichs des ersten Eingangs und des zweiten Eingangs zu bestimmen.

13. System nach Anspruch 1, das vier der Empfängereinheiten, die in einem rechtwinkligen Format angeordnet sind, umfasst, wobei die elektronische Schaltung betreibbar ist, um vier getrennte Eingänge von vier jeweiligen Paaren der vier Empfängereinheiten zu empfangen, wobei die elektronische Schaltung ferner betreibbar ist, um eine dreidimensionale Position der Sendevorrichtung anhand eines Vergleichs der getrennten Eingänge zu bestimmen.

14. System nach Anspruch 13, wobei das rechtwinklige Format eine Ebene ist, die um einen Umfang einer Computeranzeige angeordnet ist.

15. System nach Anspruch 1, das acht der Empfängereinheiten, die in einem Würfel angeordnet sind, umfasst, wobei die elektronische Schaltung betreibbar ist, um acht getrennte Eingänge von acht jeweiligen Paaren der acht Empfängereinheiten zu empfangen, wobei die elektronische Schaltung ferner betreibbar ist, um eine dreidimensionale Position der Sendevorrichtung in Bezug auf den Würfel anhand eines Vergleichs der getrennten Eingänge zu bestimmen.

16. System nach Anspruch 1, wobei die elektronische Schaltung einen Kanalpaar-Prozessor, der mit den Empfängereinheiten verbunden ist, einen Detektor und einen Positionsrechner, der mit dem Kanalpaar-Prozessor verbunden ist, und eine Ausgabevorrichtung zum Darstellen des Ortes für ein elektronisches Peripheriegerät, das an der Ausgabevorrichtung befestigbar ist, umfasst.

17. System nach Anspruch 1, wobei das elektronische Peripheriegerät ein Computer und eine Anzeigevorrichtung ist, wobei der Computer konfiguriert ist, um eine Darstellung des Ortes auf der Anzeigevorrichtung anzugeben.

18. System nach Anspruch 16, wobei der Kanalpaar-Prozessor ein I/Q-Demodulator ist, der mit der Empfängereinheit gekoppelt ist, um hiervon eine Eingabe zu empfangen, wobei der Kanalpaar-Prozessor ferner einen Analog/Digital-Umsetzer umfasst, der mit dem I/Q-Demodulator gekoppelt ist, um analoge Signale hiervon in digitale Signale umzusetzen; wobei der Kanalpaar-Prozessor ferner einen Phasendatenrechner umfasst, um Amplituden- und Phaseninformationen von den digitalen Signalen zu bestimmen und um die Amplituden- und Phaseninformationen an den Detektor und den Positionsrechner auszugeben.

19. System nach Anspruch 18, wobei das System auf CDMA basiert und der Detektor und der Positionsrechner umfassen:

einen CDMA-Prozessor zum Empfangen der Amplituden- und Phaseninformationen;
einen Sender-Detektor, der mit dem CDMA-Prozessor gekoppelt ist, um eine Identität der Sendevorrichtung zu bestimmen;
einen Datensignalextrahierer, der mit dem Sender-Detektor gekoppelt ist, um irgendwelche spezifischen Daten zu bestimmen die in das Funksignal der jeweiligen Sendevorrichtung eingebettet sind; und
einen Vorrichtungslokalisierer, der mit dem Datensignalextrahierer gekoppelt ist, um eine Position der Sendevorrichtung zu bestimmen.

20. System nach Anspruch 1, wobei die Sendervorrichtung eine Stromversorgung, einen Orthogonalcode-Generator und einen VCO-Generator, der durch einen HF-Signalmodulator zwischengeschaltet ist, umfasst, wobei die Sendervorrichtung ferner ein Impulsformungsmodul zum Formen einer von dem HF-Signalmodulator ausgegebenen Signalform umfasst; wobei die Sendervorrichtung ferner eine Antenne umfasst, die mit einem Ausgang des Impulsformungsmodulators verbunden ist, um die Funkfrequenz auszugeben.

21. System nach Anspruch 20, wobei der Orthogonalcode-Generator PN-Codes erzeugt und einen PN-Code-Chip enthält, der mit einem Mikroprozessor gekoppelt ist, wobei der PN-Code-Chip dem Mikroprozessor befiehlt, welcher PN-Code für die Sendevorrichtung erzeugt werden soll.

22. System nach Anspruch 21, wobei der Orthogonalcode-Generator ferner einen Schalter zum wahlweisen Wechseln von einem PN-Code zu einem weiteren PN-Code, wenn der Schalter betätigt wird, umfasst.

23. System nach Anspruch 1, wobei die Sendevorrichtung in eine Computerschnittstelle eingebaut ist, die aus der Gruppe ausgewählt ist, die aus einer Maus, einem Kipp-Joystick, einer Zeiger-Steuereinheit, einer Schnittstelle mit sechs Freiheitsgraden und einer Gestik-Schnittstelle besteht.

24. System nach Anspruch 1, wobei die Sendevorrichtung in ein chirurgisches Instrument eingebaut ist.

25. System nach Anspruch 1, wobei die Sendevorrichtung in einen Industrieroboter eingebaut ist.

26. System nach Anspruch 1, wobei die Empfängereinheit eine Antenne und ein Empfängerelement umfasst.

27. System nach Anspruch 1, wobei das Empfängerelement einen mit der Antenne verbundenen Verstärker für tiefes

EP 1 529 223 B1

Rauschen, ein mit dem Verstärker für tiefes Rauschen verbundenes Bandpassfilter und einen Zwischenfrequenzverstärker, der mit dem Bandpassfilter verbunden ist, um an die elektronische Schaltung auszugeben, umfasst.

28. System nach Anspruch 1, wobei das System ein Funksendesystem zum Identifizieren und lokalisieren einer oder mehrerer Funksendevorrichtungen ist, wovon jede eine der Sendevorrichtungen in einem Funksendebereich enthält, das umfasst:

- ein Signalausbreitungsmedium zum Leiten von Signalen durch den Funksendebereich;
- wobei wenigstens eine der Funksendevorrichtungen eine Einrichtung zum Erzeugen eines Funksendesignals, das dem Funksignal entspricht, und zum Koppeln des Signals mit dem Ausbreitungsmedium enthält;
- wobei jedes Funksendesignal die jeweilige Vorrichtung mittels der eindeutigen PN-Code-Signalstruktur identifiziert;
- Signalempfangseinrichtungen, wovon jede wenigstens eine der Empfangseinheiten enthält und dem Erfassungsbereich zugeordnet ist und mit dem Ausbreitungsmedium verbunden ist, um wenigstens ein Funksendesignal von der einen oder von den mehreren Funksendevorrichtungen zu empfangen; und
- Einrichtungen zum Decodieren des Funksendesignals, um wenigstens eine der Funksendevorrichtungen zu identifizieren.

29. System nach Anspruch 28, wobei die elektronische Schaltung ferner betreibbar ist, um die Position wenigstens einer der Funksendevorrichtungen in dem Funksendebereich zu bestimmen.

30. System nach Anspruch 28, wobei die eine oder die mehreren Funksendevorrichtungen aktive Vorrichtungen sind.

31. System nach Anspruch 30, das ferner Einrichtungen zum Erzeugen eines Energiefeldes in dem Ausbreitungsmedium innerhalb des Funksendebereichs umfasst.

32. System nach Anspruch 31, wobei das Energiefeld eine Spreizspektrum-Signalkomponente enthält.

33. System nach Anspruch 31, wobei jede der Funksendevorrichtungen eine Einrichtung enthält, um ein Signal durch das EM-Energiefeld für eine Operation einer aktiven Funksendevorrichtung zu empfangen.

34. System nach Anspruch 31, wobei das Energiefeld ein EM-Feld oder ein magnetisches Feld enthält.

35. System nach Anspruch 34, wobei das Ausbreitungsmedium den leeren Raum im Funksendebereich umfasst.

36. System nach Anspruch 34, wobei das Ausbreitungsmedium eine Okklusion in dem Funksendebereich umfasst.

37. System nach Anspruch 32, wobei die Spreizspektrum-Signalkomponente ein Direktfolgen-Spreizspektrum-Signal (DSSS-Signal) ist.

38. System nach Anspruch 32, wobei die Spreizspektrum-Signalkomponente ein Frequenzsprung-Spreizspektrum-Signal (FHSS-Signal) ist.

39. System nach Anspruch 32, wobei die Spreizspektrum-Signalkomponenten-Modulation die Amplitudentastung (ASK) ist.

40. System nach Anspruch 32, wobei die Spreizspektrum-Signalkomponenten-Modulation die Frequenzumtastung (FSK) ist.

41. System nach Anspruch 28, wobei die eindeutigen Codes der einen oder der mehreren Funksendevorrichtungen orthogonale Codes sind.

42. System nach Anspruch 28, wobei die eine oder die mehreren Funksendevorrichtungen aktive Vorrichtungen sind, die ein Funksendesignal erzeugen.

43. System nach Anspruch 28, wobei das Funksendesignal ein EM-Signal ist.

44. System nach Anspruch 43, wobei das Ausbreitungsmedium den leeren Raum im Funksendebereich umfasst.

**45.** System nach Anspruch 43, wobei das Ausbreitungsmedium eine EM-Reflexions- und EM-Leitungsschicht in dem Funksendebereich ist.

**46.** System nach Anspruch 45, wobei die Signalempfängereinrichtung mehrere voneinander beabstandete Signalempfänger enthält und die Einrichtung zum Bestimmen jeder der einen oder der mehreren Funksendevorrichtungen eine Einrichtung zum Berechnen der empfangenen Signalstärken und der Phasendifferenzen der Funksendesignale, die sich durch das Ausbreitungsmedium zu den mehreren Signalempfängern bewegen, enthält.

**47.** System nach Anspruch 43, wobei die Einrichtung zum Decodieren und Identifizieren jeder der einen oder der mehreren Funksendevorrichtungen Einrichtungen zum angepassten Filtern enthält, um empfangene Funksendesignale mit gespeicherten Spreizspektrum-Codes der einen oder der mehreren Funksendevorrichtungen zu vergleichen.

**48.** System nach Anspruch 28, wobei die wenigstens eine Funksendevorrichtung eine zweidimensionale Maus-Steuereinheit umfasst.

**49.** System nach Anspruch 28, wobei die wenigstens eine Funksendevorrichtung eine dreidimensionale Maus-Steuereinheit umfasst.

**50.** System nach Anspruch 28, wobei die wenigstens zwei Funksendevorrichtungen eine Kipp-Joystick-Steuereinheit umfassen.

**51.** System nach Anspruch 28, wobei die wenigstens zwei Funksendevorrichtungen eine "Zeiger"-Steuereinheit umfassen.

**52.** System nach Anspruch 28, wobei die wenigstens drei Funksendevorrichtungen eine 6-DOF-Steuereinheit (Steuereinheit mit sechs Freiheitsgraden) umfassen.

**53.** System nach Anspruch 28, wobei die wenigstens zwei Funksendevorrichtungen eine Gestik-Schnittstellen-Steuereinheit umfassen.

**54.** System nach Anspruch 28, wobei ein Teil der Funksendevorrichtungen einen Empfänger enthält, der betreibbar ist, um drahtlose Anweisungen zu empfangen, um den Betrieb der Funksendevorrichtungen zu verändern.

**55.** System nach Anspruch 28, wobei ein Teil der einen oder der mehreren Funksendevorrichtungen aktive Vorrichtungen sind, die ein Funksendesignal erzeugen, und ein weiterer Teil der einen oder der mehreren Funksendevorrichtungen aktive Sender/Empfänger-Vorrichtungen sind.

**56.** Verfahren zur Positionserfassung, das umfasst:

Senden eines Funksignals (5) durch wenigstens eine Sendevorrichtung, wobei das Funksignal jeder der Sendevorrichtungen durch ein Spreizspektrum codiert ist und eine eindeutige Pseudorausch-Code-Signalstruktur (PN-Code-Signalstruktur), die längere PN-Codes verwendet, hat;
Verarbeiten des Funksignals von der wenigstens einen Sendevorrichtung in Form eines mit einem Pseudorausch-Code modulierten Trägersignals durch wenigstens vier Verarbeitungskanäle, wovon jeder ein Paar von Empfängereinheiten enthält, die voneinander beabstandet sind, wobei jede Empfängereinheit eine andere Version des Funksignals empfängt;
Überabtasten des Funksignals um einen Faktor, der wenigstens fünfmal schneller als die PN-Chiprate des Funksignals ist; und
Bestimmen eines Ortes der Sendevorrichtung anhand eines Vergleichs der verschiedenen Versionen des Funksignals durch Messen der Richtsignalstärke (RSS) und der Trägerphasenverzögerung zwischen jeder der verschiedenen Versionen des Funksignals für jedes Paar von Empfängereinheiten.

**57.** Verfahren nach Anspruch 56, das ferner die folgenden Schritte umfasst:

Empfangen einer ersten Version wenigstens eines zusätzlichen Funksignals von wenigstens einer zusätzlichen Funksendevorrichtung, wobei das wenigstens eine zusätzliche Funksignal zu dem Funksignal orthogonal ist;
Empfangen einer zweiten Version des wenigstens einen zusätzlichen Funksignals;

Bestimmen eines Ortes der wenigstens einen Sendevorrichtung anhand eines Vergleichs der ersten und der zweiten Version des wenigstens einen zusätzlichen Funksignals.

58. Verfahren nach Anspruch 57, wobei Antennen, die verwendet werden, um die Empfangsschritte auszuführen, um eine Strecke von etwa einer halben Wellenlänge des Funksignals beabstandet sind.

59. Verfahren nach Anspruch 57, wobei wenigstens eine der Empfängereinheiten (2) eines der Paare von Empfängereinheiten mit einem weiteren der Paare von Empfängereinheiten gemeinsam genutzt wird.

60. Verfahren nach Anspruch 57, wobei die Spreizspektrum-Technologie aus der Gruppe ausgewählt ist, die aus Direktfolgen-Spreizspektrum-Signalen, Frequenzsprung-Spreizspektrum-Signalen, Zeitsprung-Spreizspektrum-Signalen, linearen Frequenzwobbel-Signalen (Chirp-Signalen) und Hybridsignalen besteht.

61. Verfahren nach Anspruch 57, wobei die Funksignale auf dem Codemultiplex-Vielfachzugriff (CDMA) basieren und die orthogonalen Codes die eindeutigen Pseudorausch-Codewörter (PN-Codewörter) sind, die jeder der Sendevorrichtungen zugeordnet sind.

62. Verfahren nach Anspruch 56, wobei die Sendevorrichtung an einer Zeigervorrichtung befestigt ist und die elektronische Schaltung mit einer Eingabevorrichtung an einem Personalcomputer gekoppelt ist, der eine Anzeigevorrichtung besitzt, derart, dass die Zeigervorrichtung betreibbar ist, um einen Cursor auf der Anzeigevorrichtung zu bewegen.

63. Verfahren nach Anspruch 56, wobei die Zeigervorrichtung wenigstens eine Taste für eine Anwenderbetätigung enthält und das von der befestigten Sendevorrichtung gesendete Funksignal der Zeigervorrichtung zugewiesen wird und wobei eine Betätigung der Taste an die Empfängereinheiten durch Invertieren des PN-Codeworts für eine Bitperiode gesendet wird.

64. Verfahren nach Anspruch 56, wobei eine in die Sendevorrichtung eingebaute Stromversorgung aus der Gruppe ausgewählt ist, die aus einer Batterie, einer Solarzelle, einer Spule, die betreibbar ist, um Energie von einem EM-Leistungsversorgungsfeld, das proximal zu der Stromversorgung abstrahlt, zu empfangen, oder einer Spule, die betreibbar ist, um elektrische Energie aus einem Magnetfeld durch mechanische Bewegung zu induzieren, besteht.

**Revendications**

1. Système de détection de position comprenant :

   au moins un dispositif d'émission (1) capable d'émettre un signal radio (5), et dans lequel ledit signal radio de chacun desdits dispositifs d'émission est codé par étalement de spectre et possède une structure de signal de code à pseudo-bruit (PN) unique utilisant des codes PN plus longs ;
   au moins quatre canaux de traitement (6) comprenant chacun une paire d'unités de récepteurs (2) espacés l'une de l'autre, chaque unité de récepteur étant capable de recevoir une version différente du signal radio sous la forme d'un signal à porteuse modulée de code à pseudo-bruit ; et
   un circuit électronique couplé aux canaux de traitement (6) et capable de déterminer un emplacement du dispositif d'émission radio par rapport aux unités de récepteurs sur la base d'une mesure de l'intensité du signal rayonné (RSS) et du déphasage de signal de porteuse entre chacune des versions différentes du signal radio pour chaque paire d'unités de récepteurs (2) ;
   ledit circuit électronique comprenant en outre un convertisseur analogique/numérique (ADC) (24) pour chaque canal de traitement, capable de sur-échantillonner le signal radio par un facteur au moins cinq fois plus rapide que la vitesse de puce PN dudit signal radio.

2. Système selon la revendication 1, comprenant en outre au moins un dispositif d'émission radio supplémentaire, chacun des dispositifs d'émission radio étant capable d'émettre un signal radio orthogonal par rapport à chacun des autres signaux radio émis par les autres dispositifs d'émission radio, le circuit électronique étant en outre capable de distinguer chacun des dispositifs d'émission radio des autres dispositifs d'émission radio sur la base des signaux radio orthogonaux, le circuit électronique étant en outre capable de déterminer un emplacement des dispositifs d'émission radio de manière sensiblement simultanée sur la base de ladite structure de signal du signal radio.

**3.** Système selon la revendication 2, dans lequel les antennes associées à chacune des unités de récepteurs sont espacées selon une distance égale à environ la moitié d'une longueur d'onde du signal radio.

**4.** Système selon l'une quelconque des revendications précédentes, dans lequel au moins l'une desdites unités de récepteurs (2) de l'une desdites paires d'unités de récepteurs est partagée avec une autre desdites paires d'unités de récepteurs.

**5.** Système selon la revendication 4, dans lequel la technologie d'étalement du spectre est choisie parmi le groupe consistant en des signaux à étalement de spectre à séquence directe, des signaux à étalement de spectre par saut de fréquence, des signaux à étalement de spectre par saut dans le temps, des signaux de balayage (compression d'impulsions) à fréquence linéaire, et des signaux hybrides.

**6.** Système selon la revendication 2, dans lequel les signaux radio sont basés sur un accès multiple à répartition par code (CDMA) et les codes orthogonaux sont lesdits mots de codes à pseudo-bruit uniques (PN) attribués à chacun des dispositifs d'émission.

**7.** Système selon la revendication 1, dans lequel le dispositif d'émission est fixé sur un dispositif de pointage et le circuit électronique est couplé à un dispositif d'entrée sur un ordinateur personnel ayant un dispositif d'affichage, afin que le dispositif de pointage soit capable de déplacer un curseur sur le dispositif d'affichage.

**8.** Système selon la revendication 7, dans lequel le dispositif de pointage comprend au moins un bouton destiné à être actionné par l'utilisateur, et le signal radio transmis par le dispositif d'émission fixé est attribué audit dispositif de pointage, et dans lequel un actionnement du bouton est émis aux unités de récepteurs en utilisant l'une des techniques d'inversion du mot de code PN pendant au moins une période binaire, et de passage à un mot de code PN différent pendant au moins une période binaire.

**9.** Système selon la revendication 1, dans lequel une alimentation électrique intégrée au dispositif d'émission est choisie parmi le groupe consistant en une batterie, une pile solaire, une bobine capable de recevoir de l'énergie de la part d'un champ d'alimentation électromagnétique rayonnant de manière proximale par rapport à l'alimentation électrique, et une bobine capable d'induire une énergie électrique à partir d'un champ magnétique par un mouvement mécanique.

**10.** Système selon la revendication 1, comprenant seulement deux des unités de récepteurs, et dans lequel l'emplacement est exprimé dans une seule dimension.

**11.** Système selon la revendication 1, dans lequel au moins l'un des dispositifs d'émission et l'une des unités de récepteurs restent fixes pendant leur fonctionnement.

**12.** Système selon la revendication 1, comprenant trois des unités de récepteurs agencées en forme de triangle, le circuit électronique étant capable de recevoir une première entrée de la part d'un premier jumelage des trois unités de récepteurs et étant en outre capable de recevoir une seconde entrée de la part d'un second jumelage des trois unités de récepteurs, les jumelages ayant une seule des unités de récepteurs en commun, le circuit électronique étant en outre capable de déterminer une position en deux dimensions du dispositif d'émission sur la base d'une comparaison de la première entrée et de la seconde entrée.

**13.** Système selon la revendication 1, comprenant quatre des unités de récepteurs agencées en forme de rectangle, le circuit électronique étant capable de recevoir quatre entrées séparées de la part de quatre jumelages respectifs des quatre unités de récepteurs, le circuit électronique étant en outre capable de déterminer une position en trois dimensions du dispositif d'émission sur la base d'une comparaison des entrées séparées.

**14.** Système selon la revendication 13, dans lequel la forme rectangulaire est un plan agencé autour d'une périphérie d'un écran d'ordinateur.

**15.** Système selon la revendication 1, comprenant huit des unités de récepteurs agencées en un cube, le circuit électronique étant capable de recevoir huit entrées séparées de la part de huit jumelages respectifs des huit unités de récepteurs, le circuit électronique étant en outre capable de déterminer une position en trois dimensions du dispositif d'émission par rapport au cube sur la base d'une comparaison des entrées séparées.

**16.** Système selon la revendication 1, dans lequel le circuit électronique comprend un processeur de paires de canaux relié aux unités de récepteurs, un détecteur et un calculateur de position relié au processeur de paires de canaux, et un dispositif de sortie destiné à présenter l'emplacement à un périphérique électronique pouvant être relié au dispositif de sortie.

**17.** Système selon la revendication 1, dans lequel le périphérique électronique est un ordinateur et un dispositif d'affichage, l'ordinateur étant configuré afin de présenter une représentation de l'emplacement sur le dispositif d'affichage.

**18.** Système selon la revendication 16, dans lequel le processeur de paires de canaux comprend un démodulateur I/Q couplé à l'unité de récepteur afin de recevoir une entrée de la part de celle-ci, le processeur de paires de canaux comprenant en outre un convertisseur analogique/numérique couplé au démodulateur I/Q afin de convertir les signaux analogiques provenant de celui-ci en signaux numériques ; le processeur de paires de canaux comprenant en outre un calculateur de données de phase destiné à déterminer des informations d'amplitude et de phase à partir des signaux numériques et à transmettre les informations d'amplitude et de phase au détecteur et au calculateur de position.

**19.** Système selon la revendication 18, dans lequel le système est basé sur un CDMA et le détecteur et le calculateur de position comprennent :

un processeur CDMA destiné à recevoir les informations d'amplitude et de phase ;
un détecteur d'émetteur couplé au processeur CDMA et destiné à déterminer une identité du dispositif d'émission ;
un extracteur de signaux de données couplé au détecteur d'émetteur afin de déterminer des données spécifiques intégrées dans le signal radio et relatives au dispositif d'émission ; et
un localisateur de dispositif couplé à l'extracteur de signaux de données afin de déterminer une position du dispositif d'émission.

**20.** Système selon la revendication 1, dans lequel le dispositif d'émission comprend une alimentation électrique, un générateur de code orthogonal, un générateur à oscillateur à tension asservie interconnecté avec un modulateur de signal RF ; le dispositif d'émission comprenant en outre un module de mise en forme d'impulsions destiné à mettre en forme une forme d'onde transmise par le modulateur de signaux RF ; le dispositif d'émission comprenant en outre une antenne reliée à une sortie du modulateur de mise en forme d'impulsions afin d'émettre la fréquence radio.

**21.** Système selon la revendication 20, dans lequel le générateur de code orthogonal génère des codes PN et est composé d'une puce à code PN couplée à un microprocesseur, la puce à code PN étant destinée à demander au microprocesseur le code PN qui doit être généré pour le dispositif d'émission.

**22.** Système selon la revendication 21, dans lequel le générateur de code orthogonal comprend en outre un commutateur destiné à changer sélectivement le code PN en un autre code PN lorsque le commutateur est activé.

**23.** Système selon la revendication 1, dans lequel le dispositif d'émission est intégré à une interface informatique choisie parmi le groupe consistant en une souris, un joystick, un contrôleur de pointeur, une interface à six degrés de liberté, et une interface de gestes.

**24.** Système selon la revendication 1, dans lequel le dispositif d'émission est intégré à un instrument chirurgical.

**25.** Système selon la revendication 1, dans lequel le dispositif d'émission est intégré à un robot industriel.

**26.** Système selon la revendication 1, dans lequel l'unité de récepteur comprend une antenne et un élément de récepteur.

**27.** Système selon la revendication 1, dans lequel l'élément de récepteur comprend un amplificateur à faible bruit relié à l'antenne, un filtre passe-bande relié à l'amplificateur à faible bruit, et un amplificateur à fréquence intermédiaire relié au filtre passe-bande afin de communiquer avec le circuit électronique.

**28.** Système selon la revendication 1, dans lequel ledit système est un système d'émission radio destiné à identifier et à localiser un ou plusieurs dispositif(s) d'émission radio comprenant chacun l'un desdits dispositifs d'émission dans une zone d'émission radio, comprenant :

- un moyen de propagation de signal destiné à acheminer les signaux sur la plage d'émission radio ;
- au moins l'un des dispositifs d'émission radio comprenant des moyens destinés à produire un signal d'émission radio correspondant audit signal radio et à coupler le signal au moyen de propagation ;
- chaque signal d'émission radio identifiant le dispositif respectif à l'aide de ladite structure de signal à code PN unique ;
- des moyens de réception de signaux comprenant chacun au moins l'une desdites unités de réception et étant associés à la zone de détection et reliés au moyen de propagation afin de recevoir au moins un signal d'émission radio de la part du ou des dispositif(s) d'émission radio ; et
- des moyens de décodage du signal d'émission radio afin d'identifier au moins l'un des dispositifs d'émission radio.

29. Système selon la revendication 28, dans lequel ledit circuit électronique est en outre capable de déterminer la position d'au moins l'un des dispositifs d'émission radio dans la plage d'émission radio.

30. Système selon la revendication 28, dans lequel le ou les dispositif(s) d'émission radio est/sont des dispositifs actifs.

31. Système selon la revendication 30, comprenant en outre un moyen de génération d'un champ d'énergie dans le moyen de propagation dans la plage d'émission radio.

32. Système selon la revendication 31, dans lequel le champ d'énergie comprend une composante de signal à étalement de spectre.

33. Système selon la revendication 31, dans lequel chacun des dispositifs d'émission radio comprend un moyen de réception d'un signal par le biais du champ d'énergie électromagnétique en vue du fonctionnement du dispositif d'émission radio actif.

34. Système selon la revendication 31, dans lequel le champ d'énergie comprend un champ électromagnétique ou un champ magnétique.

35. Système selon la revendication 34, dans lequel le moyen de propagation comprend un espace libre dans la plage d'émission radio.

36. Système selon la revendication 34, dans lequel le moyen de propagation comprend une occlusion dans la plage d'émission radio.

37. Système selon la revendication 32, dans lequel la composante de signal à étalement de spectre est un signal à étalement de spectre à séquence directe (DSSS).

38. Système selon la revendication 32, dans lequel la composante de signal à étalement de spectre est un signal à étalement de spectre à saut de fréquence (FHSS).

39. Système selon la revendication 32, dans lequel la modulation de la composante de signal à étalement de spectre est une modulation par déplacement d'amplitude (ASK).

40. Système selon la revendication 32, dans lequel la modulation de la composante de signal à étalement de spectre est une modulation par déplacement de fréquence (FSK).

41. Système selon la revendication 28, dans lequel les codes uniques du ou des dispositif(s) d'émission radio sont des codes orthogonaux.

42. Système selon la revendication 28, dans lequel le ou les dispositif(s) d'émission radio est/sont des dispositifs actifs qui génèrent un signal d'émission radio.

43. Système selon la revendication 28, dans lequel le signal d'émission radio est un signal électromagnétique.

44. Système selon la revendication 43, dans lequel le moyen de propagation comprend un espace libre dans la plage d'émission radio.

**45.** Système selon la revendication 43, dans lequel le moyen de propagation comprend une couche de réflexion et de conduction électromagnétique dans la plage d'émission radio.

**46.** Système selon la revendication 45, dans lequel les moyens de réception de signaux comprennent une pluralité de récepteurs de signaux espacés, et les moyens de détermination de la position de chacun du ou des dispositif(s) d'émission radio comprennent des moyens de calcul des intensités des signaux reçus et des différences de phase des signaux d'émission radio passant dans le moyen de propagation et allant vers la pluralité de récepteurs de signaux.

**47.** Système selon la revendication 43, dans lequel les moyens de décodage et d'identification de chacun du ou des dispositif(s) d'émission radio comprend un moyen de filtrage adaptif destiné à comparer les signaux d'émission radio reçus avec des codes d'étalement de spectre stockés du ou des dispositif(s) d'émission radio.

**48.** Système selon la revendication 28, dans lequel au moins un dispositif d'émission radio comprend un contrôleur de souris en 2 dimensions.

**49.** Système selon la revendication 28, dans lequel le au moins un dispositif d'émission radio comprend un contrôleur de souris en 3 dimensions.

**50.** Système selon la revendication 28, dans lequel les au moins deux dispositifs d'émission radio comprennent un contrôleur de joystick.

**51.** Système selon la revendication 28, dans lequel les au moins deux dispositifs d'émission radio comprennent un contrôleur de « pointeur ».

**52.** Système selon la revendication 28, dans lequel les au moins trois dispositifs d'émission radio comprennent un contrôleur à 6 degrés de liberté.

**53.** Système selon la revendication 28, dans lequel les au moins deux dispositifs d'émission radio comprennent un contrôleur d'interface de gestes.

**54.** Système selon la revendication 28, dans lequel une partie des dispositifs d'émission radio comprend un récepteur capable de recevoir des instructions sans fil permettant de faire varier le fonctionnement des dispositifs d'émission radio.

**55.** Système selon la revendication 28, dans lequel une partie du ou des dispositif(s) d'émission radio est des dispositifs actifs qui génèrent un signal d'émission radio, et une autre partie du ou des dispositif(s) d'émission radio est des émetteurs/récepteurs actifs.

**56.** Procédé de détection de position comprenant :

l'émission d'un signal radio (5) par au moins un dispositif d'émission, où ledit signal radio de chacun desdits dispositifs d'émission est codé par étalement de spectre et possède une structure de signal de code à pseudo-bruit (PN) unique utilisant des codes PN plus longs ;

le traitement dudit signal radio provenant dudit dispositif d'émission au moins sous la forme d'un signal à porteuse modulée de code à pseudo-bruit par au moins quatre canaux de traitement comprenant chacun une paire d'unités de récepteurs espacées l'une par rapport à l'autre, chaque unité de réception recevant une version différente dudit signal radio ;

le sur-échantillonnage du signal radio par un facteur au moins cinq fois plus rapide que la vitesse de puce PN dudit signal radio ; et

la détermination d'un emplacement du dispositif d'émission sur la base d'une comparaison des différentes versions dudit signal radio en mesurant l'intensité du signal rayonné (RSS) et le déphasage de porteuse entre chacune des versions différentes du signal radio pour chaque paire d'unités de récepteurs.

**57.** Procédé selon la revendication 56, comprenant en outre les étapes consistant à :

recevoir une première version d'au moins un signal radio supplémentaire provenant d'au moins un dispositif d'émission radio supplémentaire, le signal radio supplémentaire au moins étant orthogonal par rapport au signal radio ;

recevoir une seconde version du signal radio supplémentaire au moins ;

déterminer un emplacement du dispositif d'émission radio au moins sur la base d'une comparaison de la première et de la seconde versions du signal radio supplémentaire au moins.

58. Procédé selon la revendication 57, dans lequel les antennes utilisées afin d'effectuer les étapes de réception sont espacées à une distance égale à environ la moitié d'une longueur d'onde du signal radio.

59. Procédé selon la revendication 57, dans lequel au moins l'une desdites unités de récepteurs (2) de l'une desdites paires d'unités de récepteurs est partagée avec une autre desdites paires d'unités de récepteurs.

60. Procédé selon la revendication 57, dans lequel la technologie d'étalement de spectre est choisie parmi le groupe consistant en des signaux à étalement de spectre à séquence directe, des signaux à étalement de spectre par saut de fréquence, des signaux à étalement de spectre par saut dans le temps, des signaux de balayage (compression d'impulsions) à fréquence linéaire, et des signaux hybrides.

61. Procédé selon la revendication 57, dans lequel les signaux radio sont basés sur un accès multiple à répartition par code (CDMA) et les codes orthogonaux sont lesdits mots de codes à pseudo-bruit uniques (PN) attribués à chacun des dispositifs d'émission.

62. Procédé selon la revendication 56, dans lequel le dispositif d'émission est fixé sur un dispositif de pointage et le circuit électronique est couplé à un dispositif d'entrée sur un ordinateur personnel ayant un dispositif d'affichage, afin que le dispositif de pointage soit capable de déplacer un curseur sur le dispositif d'affichage.

63. Procédé selon la revendication 56, dans lequel le dispositif de pointage comprend au moins un bouton destiné à être actionné par l'utilisateur, et le signal radio émis par le dispositif d'émission fixé est attribué audit dispositif de pointage, et dans lequel un actionnement du bouton est transmis aux unités de récepteurs via une inversion du mot de code PN pendant une période binaire.

64. Procédé selon la revendication 56, dans lequel une alimentation électrique intégrée au dispositif d'émission est choisie parmi le groupe consistant en une batterie, une pile solaire, une bobine capable de recevoir de l'énergie de la part d'un champ d'alimentation électromagnétique rayonnant de manière proximale par rapport à l'alimentation électrique, et une bobine capable d'induire une énergie électrique à partir d'un champ magnétique par un mouvement mécanique.

Fig. 1A

**Fig. 1B**

Fig. 1C

Fig. 2

Fig. 3A

Fig. 3B

Fig. 3C

28

EM Field
Generator

36
Switch

34
μP

35
PN-code
(ROM or LFSR)

1

29

31

31a

32
Voltage
Regulator

33
RF Signal
Modulator

VCO

37

38
Pulse
Shaping

39
Antenna

30

Fig. 4A

40b

36
Switch

34
μP

35
PN-code
(ROM or LFSR)

1

40a

32
Voltage
Regulator

33
RF Signal
Modulator

VCO

37

38
Pulse
Shaping

39
Antenna

Fig. 4B

Power-on

1

Sufficient
Voltage
?

NO

YES

Advance µP
Clock and Fetch
next PN-code bit

36

PN-code 1

Invert PN-code 1
or
PN-code 2

Output PN-code
to RF modulator

PN-code
sequence end
?

NO

YES

Fixed time-delay
before
sequence restart

Fig. 5

Power-on

Acquire digital samples of I(t), Q(t) or A(t), Φ(t) composite signals from receiver array channel pairs

Correlate composite signals with CDMA PN-codes ← PN-codes — 15

Correlation peak detected ? ← Detection threshold

NO — YES

Compute RSS and CPD for each array pair, and separately for each detected transmitter

Identify detected transmitters → **Transmitter identity** — 27

Extract data signals → **Switch data** — 16

Locate detected transmitters → **Transmitter location** — 17

PN-code sequence end?

NO — YES

Output data packet to computer

Fig. 6

7

Fig. 7

Fig. 8

Fig. 8A

48   45

5

49

46

49   *

5

47

Fig. 9

5   51   53  54   50   5   52

Fig. 10

59

56

5

61 ✳

58

5

60

57

5

<u>Fig. 11</u>

5

5

5

5

65

5

63

64

5

<u>Fig. 12</u>

**EP 1 529 223 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CA 2397431
- US 5365461 A, Stein
- US 6147646 A
- US 4788548 A
- US 4977365 A
- US 5285209 A
- US 5510795 A
- US 5745437 A
- US 5999131 A
- US 6177907 B
- US 6288776 B
- US 6198436 B
- US 6081229 A
- US 6249680 B
- US 5510800 A
- US 5589838 A
- US 5977958 A
- US 5012049 A